# EUROPEAN PATENT APPLICATION

(11) **EP 2 824 987 A1**
(43) Date of publication of application: **14.01.2015**
(21) Application number: 13775389.3
(22) Date of filing: 15.04.2013
(51) Int. Cl.: H04W 72/12, H04W 80/00

(54) **METHOD AND DEVICE FOR TRANSMITTING SIGNALS**

(30) Priority: 13.04.2012 CN 201210109001
(71) Applicant: Huawei Technologies Co., Ltd., Shenzhen, Guangdong 518129 (CN)
(72) Inventor: ZHOU, Yongxing, Shenzhen Guangdong 518129 (CN); SUN, Jingyuan, Shenzhen Guangdong 518129 (CN); REN, Xiaotao, Shenzhen Guangdong 518129 (CN)
(74) Representative: Haley, Stephen
(86) International application number: PCT/CN2013/074207
(87) International publication number: WO 2013/152743

(57) **Abstract**

A signal transmission method and apparatus are provided, which are capable of transmitting signals by flexibly using uplink and downlink carriers. The method includes: generating a first signal according to at least one protocol layer of a first protocol stack and a second protocol stack, and sending the first signal to a receive end by using a first uplink carrier; and/or receiving, by using a first downlink carrier, a third signal sent by the receive end, and parsing the third signal according to the at least one protocol layer of the first protocol stack and the second protocol stack; where the first protocol stack is used to implement communication between a base station and a user equipment on a base station side, the second protocol stack is used to implement communication between devices, and the second protocol stack is connected to the at least one protocol layer of the first protocol stack. By using a protocol stack for implementing communication between devices, a signal can be transmitted to a user equipment by using an uplink carrier, and a signal sent by the user equipment can be received by using a downlink carrier. In this way, signal transmission can be implemented by flexibly using uplink and downlink carriers.

## Description

This application claims priority to Chinese patent application No. 201210109001.0, filed with the Chinese Patent Office on April 13, 2012 and entitled " SIGNAL TRANSMISSION METHOD AND APPARATUS", which is incorporated herein by reference in its entirety.

### TECHNICAL FIELD

The present invention relates to the communications field, and in particular, to a signal transmission method and apparatus.

### BACKGROUND

In a frequency division duplex (FDD, Frequency Division Duplexing) system, an access node (Access Point, AP) (for example, a base station) sends a signal to a user equipment (UE, User Equipment) by using a downlink carrier, and receives, by using an uplink carrier, a signal sent by the user equipment. In addition, the system often stays in a load unbalance state between the uplink carrier and the downlink carrier. That is, generally, a usage rate of the uplink carrier is low, and a capacity of the downlink carrier cannot satisfy a requirement. For example, when a user is watching a video or downloading a file, a higher data rate is required for downlink transmission, but only a low data rate is required for an uplink transmission requirement because little data needs to be uploaded.

However, in the FDD system, the access node is only capable of receiving a signal from the UE but incapable of sending a signal on the uplink carrier, and is only capable of sending a signal to the UE but incapable of receiving a signal on the downlink carrier. Therefore, signal transmission fails to be performed by flexibly using uplink and downlink carriers.

### SUMMARY

Embodiments of the present invention provide a signal transmission method and apparatus, which are capable of transmitting signals by flexibly using uplink and downlink carriers.

One aspect provides a signal transmission method. The method includes: generating a first signal according to at least one protocol layer of a first protocol stack and a second protocol stack, and sending the first signal to a receive end by using a first uplink carrier; and/or receiving, by using a first downlink carrier, a third signal sent by the receive end, and parsing the third signal according to the at least one protocol layer of the first protocol stack and the second protocol stack; where the first protocol stack is used to implement communication between a base station and a user equipment on a base station side, the second protocol stack is used to implement communication between devices, and the second protocol stack is connected to the at least one protocol layer of the first protocol stack.

Another aspect provides a signal transmission method. The method includes: receiving, by using a first uplink carrier, a first signal sent by an access node, and parsing the first signal according to at least one protocol layer of a fourth protocol stack and a third protocol stack; and/or generating a third signal according to the at least one protocol layer of the fourth protocol stack and the third protocol stack, and sending the third signal to the access node by using a first downlink carrier; where the fourth protocol stack is used to implement communication between a base station and a user equipment on a user equipment side, the third protocol stack is used to implement communication between devices, and the third protocol stack is connected to the at least one protocol layer of the fourth protocol stack.

Still another aspect provides a signal transmission apparatus. The apparatus includes: a processor, configured to: according to at least one protocol layer of a first protocol stack for implementing communication between a base station and a user equipment on a base station side and a second protocol stack for implementing communication between devices, generate a first signal or parse a third signal received by a receiving unit; a sending unit, configured to send, by using a first uplink carrier, the first signal generated by the processor to a receive end; and/or a receiving unit, configured to receive, by using a first downlink carrier, the third signal sent by the receive end; where the second protocol stack is connected to the at least one protocol layer of the first protocol stack.

Still yet another aspect provides a signal transmission apparatus. The apparatus includes: a processor, configured to: according to at least one protocol layer of a fourth protocol stack for implementing communication between a base station and a user equipment on a user equipment side and a third protocol stack for implementing communication between devices, parse a first signal received by a receiving unit or generate a second signal; a receiving unit, configured to receive, by using a first uplink carrier, the first signal sent by an access node; and/or a sending unit, configured to send, by using a first downlink carrier, the second signal generated by the processor to the access node; where the third protocol stack is connected to the at least one protocol layer of the fourth protocol stack.

According to a signal transmission method and apparatus provided in the embodiments of the present invention, an access node, such as a base station, is capable of transmitting a signal to a user equipment by using an uplink carrier, and receiving, by using a downlink carrier, a signal sent by the user equipment, according to a protocol stack for implementing communication between devices. In this way, signal transmission can be implemented by flexibly using uplink and downlink carriers.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of a signal transmission method according to an embodiment of the present invention;
FIG. 2 is a schematic diagram of a structure of a quasi-device protocol stack according to an embodiment of the present invention;
FIG. 3 is a schematic diagram of a manner of setting a quasi-device protocol stack according to an embodiment of the present invention;
FIG. 4 is a schematic flowchart of a signal transmission method according to another embodiment of the present invention;
FIG. 5 is a schematic block diagram of a signal transmission apparatus according to an embodiment of the present invention; and
FIG. 6 is a schematic block diagram of a signal transmission method according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part of but not all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, for example, the Global System of Mobile Communication (GSM, Global System of Mobile communication), the Code Division Multiple Access (CDMA, Code Division Multiple Access) system, the Wideband Code Division Multiple Access (WCDMA, Wideband Code Division Multiple Access Wireless), the general packet radio service (GPRS, General Packet Radio Service), the Long Term Evolution (LTE, Long Term Evolution), and the like.

A user equipment (UE, User Equipment), also referred to as a mobile terminal (Mobile Terminal), a mobile user equipment, and so on, may communicate with one or more core networks by using a wireless access network (for example, RAN, Radio Access Network). The user equipment may be a mobile terminal, such as a mobile phone (also referred to as a "cellular" phone), and a computer equipped with a mobile terminal. For example, the user equipment may be a portable, pocket-type, handheld, computer built-in or vehicle-mounted mobile apparatus, which exchanges language and/or data with the wireless access network.

A base station may be a base station (BTS, Base Transceiver Station) in GSM or CDMA, or may be a base station (Node B) in WCDMA, or may be an evolved base station (eNB or e-NodeB, evolutional Node B) in LTE, which is not limited in the present invention. However, for convenience of description, the following embodiments take a Node B as an example for description.

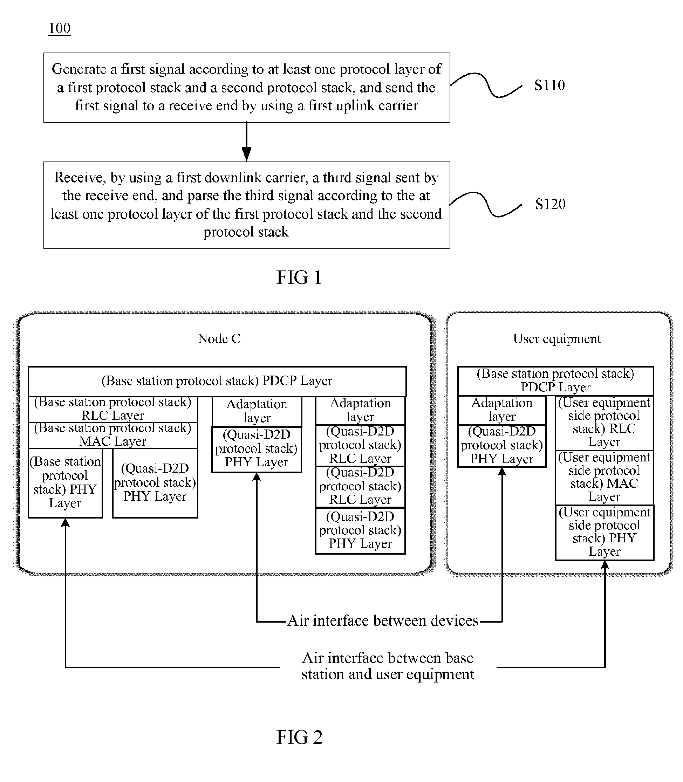

FIG. 1 is a schematic flowchart of a signal transmission method 100 according to an embodiment of the present invention, which is described from the perspective of an access node. As shown in FIG. 1, the method 100 includes the following steps:
S110. Generate a first signal according to at least one protocol layer of a first protocol stack and a second protocol stack, and send the first signal to a receive end by using a first uplink carrier; and/or
S120. Receive, by using a first downlink carrier, a third signal sent by the receive end, and parse the third signal according to the at least one protocol layer of the first protocol stack and the second protocol stack.

The first protocol stack is used to implement communication between a base station and a user equipment on a base station side, the second protocol stack is used to implement communication between devices, and the second protocol stack is connected to the at least one protocol layer of the first protocol stack.

Firstly, a structure of the access node is described.

The access node includes the first protocol stack and the second protocol stack, where the second protocol stack may be directly aggregated on the at least one protocol layer of the first protocol stack by using an internal interface, or the second protocol stack may be aggregated on the at least one protocol layer of the first protocol stack by using an adaptation layer.

In this embodiment of the present invention, the first protocol stack includes a base station protocol stack, and the at least one protocol layer of the first protocol stack at least includes a Packet Data Convergence Protocol PDCP layer of the base station protocol stack; and/or
the second protocol stack at least includes a physical layer of a device-to-device protocol stack.

Specifically, the base station protocol stack may be used as the first protocol stack. It should be understood that, the base station protocol stack is only used for exemplary description, and the present invention is not limited thereto. All other protocol stacks that can implement communication between the base station (the access node) and the user equipment on the base station (the access node) side shall fall within the protection scope of the present invention. In addition, the foregoing communication between the base station and the user equipment includes communication between the access node (for example, a relay node (RN, Relay Node) capable of communicating with the user equipment) that can implement a function of a base station and the user equipment.

A part or all of protocol layers (for example, at least one protocol layer among a physical layer, a media access layer, a radio link control protocol layer, and the like) of a device-to-device (D2D, Device-to-Device) protocol stack may be used as the second protocol stack. It should be understood that, the D2D protocol stack is only used for exemplary description, and the present invention is not limited thereto. All other protocol stacks (protocol layers) that can implement the foregoing communication (for example, communication between user equipments) between devices shall fall within the protection scope of the present invention.

In addition, in this embodiment of the present invention, the second protocol stack may include a user plane protocol stack, or may include a user plane protocol stack and a control plane protocol stack, which is not specifically limited in the present invention. Hereinafter, the user plane protocol stack is used as an example for description. The user plane protocol stack mainly includes a Packet Data Convergence Protocol (PDCP, Packet Data Convergence Protocol) layer, a radio link control (RLC, Radio Link Control) layer, a Media Access Control (MAC, Media Access Control) layer, and a physical (PHY, Physical) layer. The PDCP layer is mainly used to compress and decompress/encrypt and decrypt information. The RLC layer is mainly used to implement functions related to automatic repeat request (ARQ, Automatic Repeat Request), and segment and concatenate information or reassemble the segmented and concatenated information. The MAC layer is mainly used to select a combination of transmission formats, and implement functions related to scheduling and hybrid automatic repeat request (HARQ, Hybrid Automatic Repeat Request). The PHY layer is mainly used to provide an information transmission service for the MAC layer and a higher layer, and perform coding and modulation processing or decoding and demodulation processing according to the selected combination of transmission formats. Hereinafter, the same or similar case is not described any further.

For ease of description, hereinafter, the second protocol stack (including a part or all of protocol layers of a D2D protocol stack) is referred to as a quasi-D2D protocol stack. A manner of transmitting signals by using the second protocol stack in a device-to-device manner is referred to as a quasi-D2D manner. In addition, the quasi-D2D manner may be a D2D manner or any other manner of communication between devices, for example, a manner of communication between user equipments.

In this embodiment of the present invention, of a plurality of aggregation levels may be implemented according to a structure (for example, a protocol layer of an included D2D protocol stack) of the quasi-D2D protocol stack, which, for example, may be aggregation of a base station protocol stack (all protocol layers) and a PHY layer (a structure of the quasi-D2D protocol stack) of a D2D protocol stack, or may be aggregation of a base station protocol stack and a PHY layer and a MAC layer (another structure of the quasi-D2D protocol stack) of a D2D protocol stack, or may be aggregation of a base station protocol stack (all protocol layers) and a PHY layer, a MAC layer, an RLC layer, and the like (still another structure of the quasi-D2D protocol stack) of a D2D protocol stack.

Optionally, in this embodiment of the present invention, on the access node, the quasi-D2D protocol stack may be directly aggregated on at least one protocol layer of the base station protocol stack by using an internal interface. Specifically, as shown in FIG. 2, when a signal transmitted between the access node and the user equipment travels through the quasi-D2D protocol stack and the base station protocol stack (at least one protocol layer), if no conversion needs to be performed for the signal, the quasi-D2D protocol stack may be directly connected to the at least one protocol layer of the base station protocol stack according to the specific structure (for example, a protocol layer included) of the quasi-D2D protocol stack. For example, exemplarily but not limitatively, if a quasi-D2D protocol stack includes a PHY layer, a MAC layer, and an RLC layer (or only the PHY layer is included, but functions of the MAC layer and the RLC layer are implemented by using an adaptation layer), the quasi-D2D protocol stack may be connected to a PDCP layer of a base station protocol stack and share the PDCP layer with the base station protocol stack. If the quasi-D2D protocol stack only includes the PHY layer, the quasi-D2D protocol stack may be connected to the MAC layer of the base station protocol stack and share the PDCP layer, the RLC layer, and the MAC layer with the base station protocol stack. It should be understood that, the above-described connection manner is only used for exemplary description, and the present invention is not limited thereto.

Using a case in which a base station acquires data from a core network and sends the data to a user equipment as an example, the base station may be connected to the core network by using an S1 interface; and in addition, may acquire the data from the core network by using the S1 interface, then process the data by using at least one protocol layer of the base station protocol stack and the quasi-D2D protocol stack, and send, in a quasi-D2D manner, the processed data to a user equipment for which a third protocol stack (for implementing communication between devices, which is described in detail hereinafter) is set.

Using a case in which a base station receives data sent by a user equipment and sends the data to a core network as an example, the base station may be connected to the core network by using an S1 interface; and in addition, may receive, in a quasi-D2D manner, data sent by a user equipment for which a third protocol stack (for implementing communication between devices, which is described in detail hereinafter) is set, then process the data by using at least one protocol layer of the base station protocol stack and the quasi-D2D protocol stack, and send the processed data to the core network by using the S1 interface.

Optionally, in this embodiment of the present invention, on the access node, a quasi-D2D protocol stack may also be aggregated on at least one protocol layer of a base station protocol stack by using an adaptation layer. Therefore, that the second protocol stack is connected to at least one protocol layer of the first protocol stack includes:
the second protocol stack being connected to the at least one protocol layer of the first protocol stack by using an adaptation layer, where the adaptation layer is used to perform conversion processing for a signal between the at least one protocol layer of the first protocol stack and the second protocol stack.

In addition, in this case, the generating a first signal according to at least one protocol layer of a first protocol stack and a second protocol stack, and sending the first signal to a receive end by using a first uplink carrier may include:
generating the first signal according to the at least one protocol layer of the first protocol stack, the adaptation layer, and the second protocol stack, and sending the first signal to the receive end by using the first uplink carrier; and/or
the receiving, by using a first downlink carrier, a third signal sent by the receive end, and parsing the third signal according to the at least one protocol layer of the first protocol stack and the second protocol stack may include:
   receiving, by using the first downlink carrier, the third signal sent by the receive end, and parsing the third signal according to the at least one protocol layer of the first protocol stack and the second protocol stack.

Specifically, as shown in FIG. 2, when a signal transmitted between the access node and the user equipment travels through the quasi-D2D protocol stack and the base station protocol stack, if conversion needs to be performed for the signal, for example, the PHY layer of the quasi-D2D protocol stack is adaptively connected to the PDCP layer of the base station protocol stack, and then information processing needs to be implemented between the two layers, that is, processing information from the quasi-D2D protocol stack into information that can be received and processed by the base station protocol stack, and/or processing a signal from and processed by at least one protocol layer of the base station protocol stack into information that can be received and processed by the quasi-D2D protocol stack. In this case, according to the specific structure (for example, a protocol layer included) of the quasi-D2D protocol stack, the quasi-D2D protocol stack is connected to the at least one protocol layer of the base station protocol stack by using the adaptation layer. For example, exemplarily but not limitatively, if a quasi-D2D protocol stack includes a PHY layer, a MAC layer, and an RLC layer, the quasi-D2D protocol stack may be connected to the PDCP layer of a base station protocol stack only by using an information conversion function of an adaptation layer. If the quasi-D2D protocol stack only includes the PHY layer, functions of the MAC layer and the RLC layer of the quasi-D2D protocol stack, and the information conversion function may be implemented by using the adaptation layer; the quasi-D2D protocol stack may be connected to the PDCP layer of the base station protocol stack, or the quasi-D2D protocol stack may be connected to the MAC later of the base station protocol stack by using the information conversion function of the adaptation layer, and share the PDCP layer, the RLC layer, and the MAC layer with the base station protocol stack. It should be understood that, the above-described connection manner is only used for exemplary description, and the present invention is not limited thereto.

Using a case in which a base station acquires data from a core network and sends the data to a user equipment as an example, the base station may be connected to the core network by using an S1 interface; and in addition, may acquire the data from the core network by using the S1 interface, then process the data by using at least one protocol layer of the base station protocol stack, the adaptation layer, and the quasi-D2D protocol stack, and send, in a quasi-D2D manner, the processed data to a user equipment for which a third protocol stack (for implementing communication between devices, which is described in detail hereinafter) is set.

Using a case in which a base station receives data sent by a user equipment and sends the data to a core network as an example, the base station may be connected to the core network by using an S1 interface; and in addition, may receive, in a quasi-D2D manner, data sent by a user equipment for which a third protocol stack (for implementing communication between devices, which is described in detail hereinafter) is set, then process the data by using at least one protocol layer of the base station protocol stack, the adaptation layer, and the quasi-D2D protocol stack, and send the processed data to the core network by using the S1 interface.

In this way, by setting an adaptation layer, conversion of a signal between a quasi-D2D protocol stack and a base station protocol stack can be ensured, and communication between user equipments can be implemented in cooperation with the quasi-D2D protocol stack according to a requirement. Therefore, configuration of the quasi-D2D protocol stack is more flexible.

Optionally, in this embodiment of the present invention,
the generating a first signal according to at least one protocol layer of a first protocol stack and a second protocol stack, and sending the first signal to a receive end by using a first uplink carrier includes:
generating the first signal according to the at least one protocol layer of the first protocol stack and at least one second protocol stack, and sending the first signal to the receive end by using the first uplink carrier, where one second protocol stack corresponds to one first signal, and corresponds to at least one receive end; and/or
the receiving, by using a first downlink carrier, a third signal sent by the receive end, and parsing the third signal according to the at least one protocol layer of the first protocol stack and the second protocol stack includes:
   receiving, by using the first downlink carrier, the third signal sent by the receive end, and parsing the third signal according to the at least one protocol layer of the first protocol stack and at least one second protocol stack, where one second protocol stack corresponds to one third signal, and corresponds to at least one receive end.

Specifically, quasi-D2D protocol stacks in a plurality of structures (the number of layers included, and a function implemented by the adaptation layer) may be set on the access node according to the third protocol stack that is set by the user equipment. For example, if the third protocol stack of the user equipment includes only the PHY layer, the access node may also set the second protocol stack only including the PHY layer. In this way, when the access node communicates with the user equipment in a quasi-D2D manner, in one aspect, the access node may communicate, by using a quasi-D2D protocol stack, with one or more user equipments corresponding to the quasi-D2D protocol stack; in another aspect, the access node may communicate, by using a plurality of quasi-D2D protocol stacks, with one user equipment corresponding to the plurality of quasi-D2D protocol stacks. In addition, when the access node simultaneously communicates with a plurality of user equipments, a plurality of communication manners such as frequency division multiplexing, code division multiplexing, and space division multiplexing may be used.

It should be understood that, the above-described mapping relationship between the third protocol stack of the user equipment and the second protocol stack of the access node is only one embodiment of the present invention, and all other structures that can implement communication between the user equipment and the access node in a device-to-device communication manner shall fall within the protection scope of the present invention.

In addition, optionally, in this embodiment of the present invention, a plurality of quasi-D2D protocol stacks may be the same or different. The plurality of quasi-D2D protocol stacks may be connected to a same layer of a base station protocol stack, or the plurality of quasi-D2D protocol stacks may be connected to different layers of the base station protocol stack. For example, exemplarily but not limitatively, as shown in FIG. 2, a quasi-D2D protocol stack 1 and a quasi-D2D protocol stack 2 that can perform information transmission to a PDCP layer of the base station protocol stack may be connected to the PDCP layer of the base station protocol stack, where specific structures of the quasi-D2D protocol stack 1 and the quasi-D2D protocol stack 2 may be the same or different (a structure and a function of an adaptation layer vary with a protocol layer included in a quasi-D2D protocol stack); and a quasi-D2D protocol stack 3 that can perform information transmission to an RLC layer of the base station protocol stack may be connected to the RLC layer of the base station protocol stack.

In addition, in this embodiment of the present invention, exemplarily but not limitatively, the access node for which a plurality of quasi-D2D protocol stacks are set is capable of simultaneously communicating with a plurality of user equipments for which the third protocol stack (for implementing communication between devices, which is described in detail hereinafter) is set. The access node may communicate with the plurality of user equipments by using the same or different carriers. For example, carriers (or frequency domain units such as subcarriers and subbands) bearing various signals may be made orthogonal in a frequency division multiplexing manner, or the access node may communicate with the plurality of user equipments in, for example, a space division multiplexing manner.

In this way, the access node may simultaneously serve a plurality of user equipments for which the third protocol stack is set, and an appropriate quasi-D2D protocol stack may be selected according to settings of the third protocol stack of the user equipment, thereby accommodating different configurations of the third protocol stack of the user equipment.

Optionally, in this embodiment of the present invention, at least two second protocol stacks are connected to the at least one protocol layer by using an adaptation layer, or each second protocol stack of at least two second protocol stacks is connected to the at least one protocol layer by using an adaptation layer.

Specifically, different (in structure or function) quasi-D2D protocol stacks may be connected to at least one protocol layer of a base station protocol stack by using an adaptation layer. The adaptation layer may have a switching function, so that a corresponding function is switched according to a structure of an activated quasi-D2D protocol stack. In this way, the activated quasi-D2D protocol stack can perform information transmission to the base station protocol stack.

Optionally, in this embodiment of the present invention, the second protocol stack and the first protocol stack are set together for a first access network entity; or the first protocol stack is set for a first access network entity, and the second protocol stack is set for a second access network entity connected to the first access network entity.

In addition, in a case in which an adaptation layer is set, the second protocol stack, the first protocol stack, and the adaptation layer may be set together for the first access network entity; or
the first protocol stack and the adaptation layer may be set for the first access network entity, and the second protocol stack may be set for the second access network entity connected to the first access network entity; or
the first protocol stack may be set for the first access network entity, and the second protocol stack and the adaptation layer may be set for the second access network entity connected to the first access network entity.

Specifically, in this embodiment of the present invention, a quasi-D2D protocol stack may be set for a Node B (for which a base station protocol stack is configured), to form a new access node Node C (a specific connection manner of which is described above).

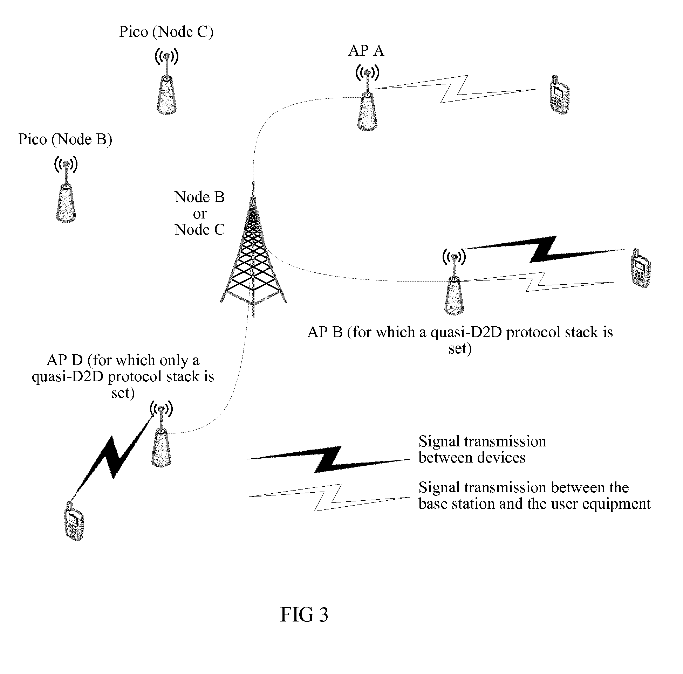

In another aspect, as shown in FIG. 3, in this embodiment of the present invention, the quasi-D2D protocol stack may also be set for an access network entity outside the Node B, and is connected, by using an optical fiber and the like, to the base station protocol stack (at least one protocol layer) that is set for the Node B. For example, exemplarily but not limitatively, in a heterogeneous network (HetNet), the base station protocol stack may be set for a macro base station Node B, the quasi-D2D protocol stack may be set for another access node connected to the Node B, and the Node B and the another access node for which the quasi-D2D protocol stack is set form a Node C. In addition, in this embodiment of the present invention, the another access node (the second access network entity) connected to the Node B may include a micro station Micro and a pico station Pico.

In addition, in this case, a plurality of Node Bs may share a quasi-D2D protocol stack that is set for the foregoing second access network entity. In addition, when the Node B is connected to a Node C (by using an optical fiber and the like), the Node B may also use a quasi-D2D protocol stack that is set for the Node C.

In this way, an existing Node B does not need to be reconstructed, which reduces reconstruction work of setting a quasi-D2D protocol stack for an existing access node, and thereby improves practicality of the present invention.

In addition, in a HetNet system, according to a statistical feature of network service distribution, some nodes may use the Node B, and some nodes may use the Node C. A coverage scope may be expanded by connecting the Node C to a certain access node by using an optical fiber and the like.

Optionally, the second access network entity controlled by the Node C may include a second access network entity for which only the base station protocol stack is set, a second access network entity for which both the base station protocol stack and the quasi-D2D protocol stack are set, and a second access network access entity for which only the quasi-D2D protocol stack is set. The second access network entity for which both the base station protocol stack and the quasi-D2D protocol stack are set may send a signal to the user equipment by using a downlink carrier and according to the base station protocol stack, and send a signal to the user equipment by using an uplink carrier and according to the quasi-D2D protocol stack. However, the second access network entity for which only the quasi-D2D protocol stack is set may serve the user equipment only according to the quasi-D2D protocol stack. However, in a case in which a connection to the Node B or the Node C by using an optical fiber and the like, the quasi-D2D protocol stack and the base station protocol stack of the Node B or the Node C may be aggregated, so that the user equipment can be served by using the base station protocol stack and/or the quasi-D2D protocol stack according to a requirement.

In this way, a service scope of the Node C can be expanded, and a flexible application of the Node C is ensured.

In this embodiment of the present invention, the receive end includes an access node for which the third protocol stack is set and a user equipment for which the third protocol stack is set, where a fourth protocol stack is set for the user equipment, and the fourth protocol stack is used to implement communication between a base station and a user equipment, and corresponds to the first protocol stack.

Specifically, in one aspect, communication can be performed between two Node Cs by using an air interface and according to the quasi-D2D protocol stack.

In another aspect, communication can be performed between the Node C and the user equipment by using an air interface and according to the quasi-D2D protocol stack.

The following describes a specific process of communication, according to the quasi-D2D protocol stack, between the Node C (for which the quasi-D2D protocol stack and the base station protocol stack are set) and the user equipment (hereinafter, unless otherwise specified, referred to as the user equipment for short) for which the quasi-D2D protocol stack is set.

Optionally, in this embodiment of the present invention, in normal cases, the Node C may communicate with the user equipment according to the base station protocol stack. That is, in addition to the generating a first signal according to at least one protocol layer of a first protocol stack and a second protocol stack, and sending the first signal to a receive end by using a first uplink carrier, the method further includes:
generating a fifth signal according to the first protocol stack, and sending the fifth signal to the receive end by using the first downlink carrier; and/or
in addition to the receiving, by using a first downlink carrier, a third signal sent by the receive end, and parsing the third signal according to the at least one protocol layer of the first protocol stack and the second protocol stack, the method further includes:
   receiving, by using the first uplink carrier, a sixth signal sent by the receive end, and parsing the sixth signal according to the first protocol stack.

In this embodiment of the present invention, the process of communication, between the Node C and the receive end (the user equipment) according to the base station protocol stack is the same as that in the prior art, which is not described herein any further.

In addition, in this embodiment of the present invention, in a case in which an activation condition is satisfied, the Node C may activate the second protocol stack, and perform a related process in step S110 and/or step S120, that is, send a signal to the user equipment by using the first uplink carrier, and/or receive, by using the first downlink carrier, a signal sent by the user equipment.

The following describes exemplarily but not limitatively, the foregoing activation condition. That is, optionally, in this embodiment of the present invention, the method further includes:
if a ratio of load of the first downlink carrier to a capacity of the first downlink carrier exceeds a first threshold, or if load of the first uplink carrier is lower than a capacity of the first uplink carrier, or if a first message sent by the receive end is received, where the first message carries information that requests to use the first uplink carrier to send a signal to the receive end, determining to send the signal to the receive end by using the first uplink carrier; and/or
if a ratio of load of the first uplink carrier to a capacity of the first uplink carrier exceeds a second threshold, or if load of the first downlink carrier is lower than a capacity of the first downlink carrier, or if a second message sent by the receive end is received, where the second message carries information that requests to use the first downlink carrier to receive a signal sent by the receive end, determining to receive, by using the first downlink carrier, the signal sent by the receive end.

Specifically, the Node C may monitor carriers (including the first uplink carrier and the first downlink carrier) for transmitting signals (including data and control signaling). If a ratio of load of the downlink carrier to a capacity of the downlink carrier exceeds a certain threshold (for example, 1), that is, the capacity of the downlink carrier fails to satisfy a requirement whereas usage of the uplink carrier is low, or a ratio of load of the uplink carrier to a capacity of the uplink carrier exceeds a certain threshold (for example, 1), that is, the capacity of the uplink carrier fails to satisfy a requirement whereas usage of the downlink carrier is low, it can be determined that the foregoing activation condition is satisfied.

In addition, optionally, in this embodiment of the present invention, the user equipment may request the Node C to perform signal transmission in a quasi-D2D manner; according to the request, the Node C may immediately activate the quasi-D2D protocol stack and perform signal transmission to the user equipment in the quasi-D2D manner, or may determine, according to the request, whether the foregoing activation request is satisfied, and activate the quasi-D2D protocol stack and perform signal transmission to the user equipment in the quasi-D2D manner in a case in which the foregoing activation condition is satisfied. It should be understood that, the above-described activation condition, a parameter for determining the activation condition and a threshold of the parameter are only for exemplary description of the present invention, and the present invention is not limited thereto.

In this way, signal transmission can be flexibly performed in the quasi-D2D manner, thereby improving the transmission efficiency.

In addition, in this embodiment of the present invention, the first uplink carrier and the first downlink carrier may belong to a same frequency division duplex (FDD, Frequency Division Duplexing) carrier pair, or may belong to different FDD carrier pairs.

In addition, in this embodiment of the present invention, before the sending the first signal to a receive end by using a first uplink carrier, the method further includes:
sending a third message to the receive end, where the third message carries information that instructs the receive end to receive a signal by using the first uplink carrier; and/or
before the receiving, by using a first downlink carrier, a third signal sent by the receive end, the method further includes:
   sending a fourth message to the receive end, where the fourth message carries information that instructs the receive end to send a signal by using the first downlink carrier.

Specifically, in this embodiment of the present invention, optionally, the Node C may send scheduling information for instructing the user equipment to receive a signal by using the first uplink carrier; where: the scheduling information includes at least one among a modulation and coding scheme (MSC, Modulation and Coding Scheme), a subband, transmit power, a demodulation reference signal (DM RS, DeModulation Reference Signal), and the like that are used when a signal is sent to the receive end by using the first uplink carrier and according to at least one protocol layer of the first protocol stack and the second protocol stack, so that the UE receives, according to the scheduling information, a signal sent by the Node C by using the first uplink carrier and according to at least one protocol layer of the first protocol stack and the second protocol stack; and/or the scheduling information includes at least one among the modulation and coding scheme, the subband, the transmit power, the demodulation reference signal, and the like that are used when a signal sent by the receive end is received by using the first downlink carrier and according to the at least one protocol layer and the second protocol stack, so that the UE sends, according to the scheduling information, a signal to the Node C by using the first downlink carrier and according to at least one protocol layer of the first protocol stack and the second protocol stack.

In addition, optionally, in this embodiment of the present invention, after it is determined that a signal needs to be sent to the receive end by using the first uplink carrier, and/or that a signal sent by the receive end needs to be received by using the first downlink carrier, the Node C may further send an activation message to the user equipment, so that the user equipment activates the quasi-D2D protocol stack and performs signal transmission to the Node C in the quasi-D2D manner.

Subsequently, in S110, a first signal is generated according to at least one protocol layer of a first protocol stack and a second protocol stack, and the first signal is sent to a receive end by using a first uplink carrier; and/or
in S120, a third signal sent by the receive end is received by using a first downlink carrier, and the third signal is parsed according to the at least one protocol layer of the first protocol stack and the second protocol stack.

Specifically, in this embodiment of the present invention, when the Node C sends a signal to the user equipment, the Node C may acquire data from the core network by using the S1 interface and transfers the data to the PDCP layer of the base station protocol stack, processes the data from the core network according to at least the PDCP layer (whether another protocol layer is included is determined according to a specific structure of quasi-D2D) of the base station protocol stack and the quasi-D2D protocol stack (whether according to an adaptation layer may be selected according to the structure of quasi-D2D), generates data (hereinafter referred to as first mode data) that can be communicated with the user equipment in a quasi-D2D manner, and sends the first mode data to the user equipment by using the first uplink carrier in the quasi-D2D manner.

In addition, optionally, the foregoing communication process may be performed by using an interface (hereinafter referred to as a quasi-D2D air interface) similar to a D2D air interface. Hereinafter, the same or similar scenario is not described any further.

In addition, in this embodiment of the present invention, the Node C may send, according to the base station protocol stack, second mode data to the user equipment by using the first downlink carrier that forms a carrier pair with the first uplink carrier in a base station-to-user equipment manner, where the second mode data is data transmitted between the base station and the user equipment. (The data is hereinafter referred to as second mode data.)

In this way, a transmission rate can be further improved.

In this embodiment of the present invention, when the user equipment sends a signal to the Node C, the Node C receives, by using the first downlink carrier, the first mode data sent by the user equipment, where the first mode data is data processed by the user equipment according to the quasi-D2D protocol stack and at least a PDCP layer (whether another protocol layer is included is determined according to a specific structure of quasi-D2D) of a user equipment side protocol stack. Afterwards, the Node C processes the first mode data according to the quasi-D2D protocol stack and at least the PDCP layer (whether another protocol layer is included is determined according to the specific structure of quasi-D2D) of the base station protocol stack, and sends the processed data to the core network by using the S1 interface.

In addition, in this embodiment of the present invention, the Node C may receive, by using the first uplink carrier that forms a carrier pair with the first downlink carrier and according to the base station protocol stack, data (the second mode data) that is sent by the user equipment and can be transmitted in a user equipment-to-base station manner.

In this way, the transmission rate can be further improved.

In addition, in this embodiment of the present invention, the sending the first signal to a receive end by using a first uplink carrier includes:
sending the first signal to the receive end by using the first uplink carrier and using transmit power less than or equal to a third threshold.

The third threshold includes transmit power of the user equipment.

Specifically, the Node C may send the first mode data to the user equipment by using the uplink carrier and using transmit power less than or equal to the maximum transmit power (for example, 23 dBm) of the user equipment. It should be understood that, the above-described value is for illustrative description in an embodiment of the present invention, and the present invention is not limited thereto.

In this way, it is ensured that small interference is generated when the Node C sends the foregoing first mode data to the user equipment by using the uplink carrier.

Optionally, in this embodiment of the present invention, the method further includes:
generating a second signal according to the first protocol stack, and sending the second signal to the receive end by using a second downlink carrier; and/or
receiving, by using a second uplink carrier, a fourth signal sent by the receive end, and parsing the fourth signal according to the first protocol stack.

Specifically, the Node C may send the foregoing second mode data to the user equipment by using the second uplink carrier and according to the base station protocol stack.

In addition, the Node C may also receive, by using the second downlink carrier and according to the base station protocol stack, the foregoing second mode data sent by the user equipment.

In this way, the transmission rate can be further improved.

In addition, the signal (the first signal) sent by the Node C to the user equipment by using the first uplink carrier and the signal (the second signal) sent by the Node C to the user equipment by using the second downlink carrier may correspond to the same data or correspond to different data, where the same data may be the same part or different parts of a segment of data. Likewise, the signal (the third signal) that is sent by the user equipment and received by the Node C by using the first downlink carrier and the signal (the fourth signal) that is sent by the user equipment and received by the Node C by using the second uplink carrier may correspond to the same data or correspond to different data.

Therefore, if the first signal and the second signal correspond to the same data, the Node C needs to explicitly or implicitly notify the user equipment that the data sent and received by the Node C in different protocol stack manners (the base station protocol stack and the quasi-D2D protocol stack) corresponds to the same data, so as to ensure that the user equipment is capable of completely receiving data of the same data. In addition, if the third signal and the fourth signal correspond to the same data, the Node C also needs to explicitly or implicitly notify the user equipment so that the user equipment performs transmission according to the same data. That is, optionally, in this embodiment of the present invention, the method further includes:
determining that the first signal and the second signal correspond to the same data; and/or
determining that the third signal and the fourth signal correspond to the same data.

In addition, in this embodiment of the present invention, to ensure continuity of data transmission, the Node C may notify the user equipment that the first signal and the second signal correspond to the same data and/or the third signal and the fourth signal correspond to the same data. That is, the method further includes:
sending a fifth message to the receive end, where the fifth message carries information indicating that the first signal and the second signal correspond to the same data; and/or
sending a sixth message to the receive end, where the sixth message carries information indicating that the third signal and the fourth signal correspond to the same data.

Specifically, the Node C may notify, by using high-level signaling such as Radio Resource Control protocol (RRC, Radio Resource Control) signaling, the user equipment that the second mode data sent by the Node C to the user equipment according to the base station protocol stack and the first mode data sent by the Node C to the user equipment according to the quasi-D2D protocol stack correspond to the same data, and that only the transmission manner is changed, so that the user equipment can receive data according to the same data. The user equipment considers that the data received in different manners is a data packet corresponding to the same data. The above-described RRC signaling as the high-level signaling is for illustrative description in an embodiment of the present invention, and the present invention is not limited thereto. Hereinafter, the same or similar scenario is not described any further.

Described above is that the Node C notifies, in a manner of sending an indication message (the fifth message and/or the sixth message) to the user equipment, the user equipment that the first signal and the second signal correspond to the same data and/or that the third signal and the fourth signal correspond to the same data. However, the present invention is not limited thereto, and all other manners that enable the user equipment to determine that the first signal and the second signal correspond to the same data and/or that the third signal and the fourth signal correspond to the same data, to ensure continuity of communication shall fall within the protection scope of the present invention. For example, it may also be determined in an initial stage of establishing a communication connection, or in a case in which the user equipment is predefined to use the foregoing two manners (receiving, by separately using the uplink carrier and the downlink carrier, a signal sent by the Node C, and/or sending a signal to the Node C by separately using the downlink carrier and the uplink carrier) to determine, that the first signal and the second signal correspond to the same data and/or that the third signal and the fourth signal correspond to the same data. Therefore, in this embodiment of the present invention, the determining that the first signal and the second signal correspond to the same data includes:
when sending a signal to the receive end by using the first uplink carrier and the second downlink carrier, determining that the first signal and the second signal correspond to the same data; and/or
the determining that the third signal and the fourth signal correspond to the same data includes:
   when receiving, by using the first downlink carrier and the second uplink carrier, a signal sent by the receive end, determining that the third signal and the fourth signal correspond to the same data.

In addition, in the foregoing embodiment, the first uplink carrier and the second downlink carrier may belong to the same FDD carrier pair, or may belong to different FDD carrier pairs. The second uplink carrier and the first downlink carrier may belong to the same FDD carrier pair, or may belong to different FDD carrier pairs. In addition, the first uplink carrier and the second uplink carrier may be the same or different, and the first downlink carrier and the second downlink carrier may be the same or different. The present invention set no limitation thereto. In addition, scheduling information (for example, at least one among the used modulation and coding scheme, the used subband, the used transmit power, the demodulation reference signal configuration, and the like) of a data packet borne on the uplink carrier may be completely independent of, or may be related to scheduling information of a data packet borne on the downlink carrier. For example, the two data packets use a same DM RS configuration, or even may be a same data packet, so that the UE needs to connect and then decode the signals received on the uplink carrier and the downlink carrier, which may be understood as a scheduling manner of connecting the uplink and downlink carriers to form one carrier.

In this way, in a case in which the Node C sends a signal to the user equipment by separately using the uplink carrier and the downlink carrier, and/or receives, by separately using the downlink carrier and the uplink carrier, a signal sent by the user equipment, continuity of the communication can be ensured.

In this embodiment of the present invention, the generating a first signal according to at least one protocol layer of a first protocol stack and a second protocol stack, and sending the first signal to a receive end by using a first uplink carrier includes:
generating the first signal in at least one timeslot in a time division multiplexing manner according to the at least one protocol layer of the first protocol stack and the second protocol stack, and sending the first signal to the receive end by using the first uplink carrier; and/or
the receiving, by using a first downlink carrier, a third signal sent by the receive end, and parsing the third signal according to the at least one protocol layer of the first protocol stack and the second protocol stack includes:
   receiving, by using the first downlink carrier in at least one timeslot in a time division multiplexing manner, the third signal sent by the receive end, and parsing the third signal according to the at least one protocol layer of the first protocol stack and the second protocol stack.

Specifically, in this embodiment of the present invention, the Node C may send, by using the first uplink carrier in the first timeslot in the time division multiplexing (TDM, Time Division Multiplexing) manner, a signal to a user equipment (hereinafter referred to as a first-category user equipment) for which a quasi-D2D protocol stack is set, and receive, by using the first uplink carrier in a timeslot except (before or after) the first timeslot, a signal sent by a user equipment (which may include the foregoing first-category user equipment, or may include a user equipment for which no quasi-D2D protocol stack is set, hereinafter referred to as a second-category user equipment) served by the Node C.

In addition, the Node C may also receive, by using the first downlink carrier in a second timeslot in the TDM manner, a signal sent by the first-category user equipment, and send, by using the first downlink carrier in a timeslot except (before or after) the second timeslot, a signal to the user equipment (which may include the foregoing first-category user equipment, or may include the second-category user equipment) served by the Node C.

Herein, both the first timeslot and/or the second timeslot may be one or more continuous or non-continuous timeslots.

In this way, signal transmission is performed in the TDM manner, and capacities of uplink and downlink channels can be conveniently and dynamically allocated by adjusting a timeslot interchange point, which is therefore ideal for communication of asymmetric services and suitable for an environment in which uplink and downlink services are asymmetric.

In addition, in this embodiment of the present invention, the method further includes:
sending a seventh message, where the seventh message carries information that indicates receive/transmit transition time before and/or after the at least one timeslot.

The receiving party of the seventh message may be a user equipment that is served by the Node C and for which the quasi-D2D protocol stack and the user equipment side protocol stack (corresponding to the base station protocol stack, which is described in detail hereinafter) are set. In addition, the receiving party of the seventh message may be a receive end of the first timeslot and/or the second timeslot, or a non-receive end of the first timeslot and/or the second timeslot. The seventh message may be dynamically notified, and may be notified by means of high-level signaling such as RRC signaling.

The Node C may determine receive/transmit transition time of the Node C on the uplink and downlink carriers according to a link channel condition for signal transmission between the Node C and the user equipment in a base station-to-user equipment manner and a link channel condition for signal transmission between the Node C and the user equipment in a quasi-D2D manner, such as a channel delay and a range of interference generated. For example, if a channel delay of a link in the quasi-D2D manner is longer, and the range of interference is larger, a longer protection duration may be needed. When the link channel condition changes, the receive/transmit transition time also needs to be adjusted, so that the receive/transmit transition time can be dynamically adjusted when the Node C dynamically transmits signals to different user equipments in the quasi-D2D manner. That is, the Node C may dynamically determine the receive/transmit transition time, for example, 1 symbol or 2 symbols, according to an actual service requirement. In addition, the Node C notifies the user equipment (including the first-category user equipment) served by the Node C of the information. It should be understood that, the above-described transition time and its specific value are only an embodiment of the present invention, and all other parameters and their values that can enable the user equipment to correctly identify a time interval between the time when an uplink carrier bears a downlink signal and the time when the uplink carrier bears an uplink signal (or a time interval between the time when a downlink carrier bears an uplink signal and the time when the downlink carrier bears a downlink signal) or a time interval between the time when an uplink carrier bears an uplink signal and the time when the uplink carrier bears a downlink signal (or a time interval between the time when a downlink carrier bears a downlink signal and the time when the downlink carrier bears an uplink signal) shall fall within the protection scope of the present invention.

In addition, in this embodiment of the present invention, the method further includes:
sending an eighth message, where the eighth message carries information indicating that a subframe corresponding to the first uplink carrier in the at least one timeslot is a first dedicated subframe; and/or
sending a ninth message, where the ninth message carries information indicating that a subframe corresponding to the first downlink carrier in the at least one timeslot is a second dedicated subframe.

Specifically, when the Node C activates the quasi-D2D protocol stack, the Node C may no longer send a downlink signal such as a pilot signal in some downlink subframes (at least including downlink subframes that use the quasi-D2D protocol stack), or may no longer receive, in some uplink subframes (at least including uplink subframes that use the quasi-D2D protocol stack), a signal sent by the user equipment (including the first-category user equipment and the second-category user equipment). To ensure that all user equipments can normally work, the Node C needs to notify the user equipment served by the base station that the corresponding subframe is a dedicated subframe. In this way, the user equipment determines that the Node C does not receive a signal in the first timeslot by using the first uplink carrier, or the user equipment determines that the Node C does not send a signal in the first timeslot by using the first downlink carrier.

In addition, in this embodiment of the present invention, the Node C may dynamically set the subframe corresponding to the first downlink carrier in the second timeslot to a multicast broadcast single frequency network (MBSFN, Multicast Broadcast Single Frequency Network) subframe.

The Node C may dynamically set a subframe for transmitting or receiving a signal in a quasi-D2D manner, so as to dynamically configure the subframe corresponding to the first uplink carrier in the first timeslot as the first dedicated subframe, and/or configure the subframe corresponding to the first downlink carrier in the second timeslot as the second dedicated subframe. The eighth message and/or the ninth message may be notified by means of high-level signaling such as RRC signaling. For example, the Node C may dynamically configure the MBSFN subframe by using the RRC signaling and send configuration information of the MBSFN subframe to the user equipment.

In this embodiment, the signal includes data and/or control signaling, and therefore processing for the signal includes processing for the data and/or processing for the control signaling.

According to a signal transmission method provided in this embodiment of the present invention, a quasi-D2D protocol stack is activated according to a requirement, so that a Node C sends a signal to a user equipment by using an uplink carrier in a quasi-D2D manner, and/or receives, by using a downlink carrier, a signal sent by the user equipment. In this way, an access node can flexibly use the uplink and downlink carriers, so that the access node can perform signal transmission to the user equipment by using a carrier wider than a bandwidth of the uplink and downlink carriers that is specified in FDD. For example, when an access node is capable of sending signals on the uplink carrier to a user equipment by using 50% of the time, theoretically, a downlink data rate of the access node may be correspondingly improved by 50%.

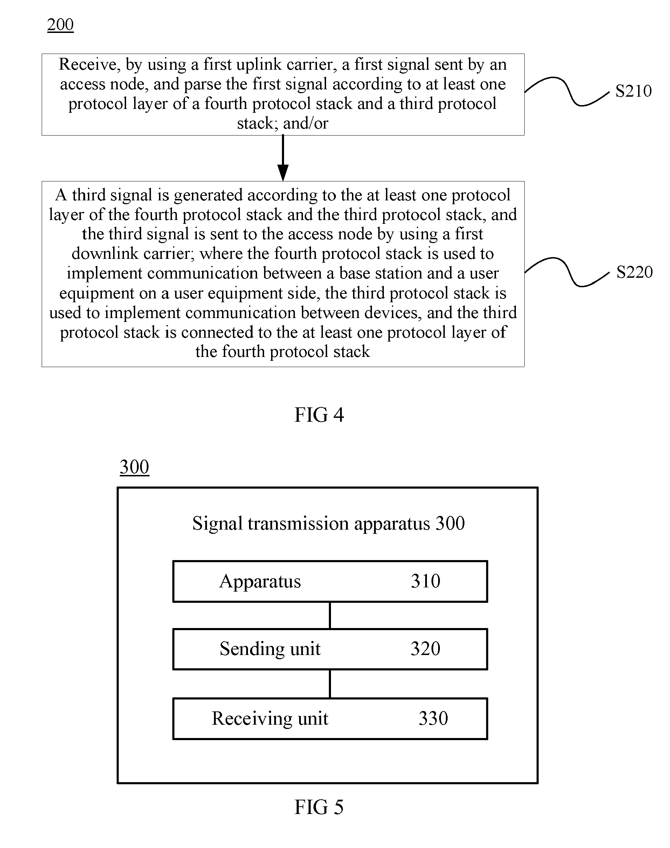

FIG. 4 is a schematic flowchart of a signal transmission method 200 according to an embodiment of the present invention, which is described from the perspective of a user equipment. As shown in FIG. 4, the method 200 includes the following steps:

S210. Receive, by using a first uplink carrier, a first signal sent by an access node, and parse the first signal according to at least one protocol layer of a fourth protocol stack and a third protocol stack; and/or

Generate a third signal according to the at least one protocol layer of the fourth protocol stack and the third protocol stack, and send the third signal to the access node by using a first downlink carrier; where
the fourth protocol stack is used to implement communication between a base station and a user equipment on a user equipment side, the third protocol stack is used to implement communication between devices, and the third protocol stack is connected to the at least one protocol layer of the fourth protocol stack.

Firstly, a structure of the user equipment is described.

In this embodiment of the present invention, the fourth protocol stack includes a user equipment side protocol stack, and the at least one protocol layer of the fourth protocol stack at least includes a Packet Data Convergence Protocol PDCP layer of the user equipment side protocol stack; and/or
the third protocol stack at least includes a physical layer of a device-to-device protocol stack.

Specifically, the user equipment side protocol stack may be used as the fourth protocol stack. It should be understood that, the user equipment side protocol stack is only used for exemplary description, and the present invention is not limited thereto. All other protocol stacks that can implement communication between the base station (the access node) and the user equipment on the user equipment side shall fall within the protection scope of the present invention.

A part or all of protocol layers (for example, one or more layers among a physical layer, a media access layer, and a radio link control protocol layer) of a D2D protocol stack may be used as the third protocol stack. It should be understood that, the D2D protocol stack is only used for exemplary description, and the present invention is not limited thereto. All other protocol stacks (protocol layers) that can implement communication between user equipments shall fall within the protection scope of the present invention.

In addition, in this embodiment of the present invention, the third protocol stack may include a user plane protocol stack, or may include a user plane protocol stack and a control plane protocol stack, which is not specifically limited in the present invention. Hereinafter, the user plane protocol stack is used as an example for description. The user plane protocol stack mainly includes a PDCP layer, an RLC layer, a MAC layer, and a PHY layer. The PDCP layer is mainly used to compress and decompress/encrypt and decrypt information. The RLC layer is mainly used to implement functions related to ARQ, and segment and concatenate information or reassemble the segmented and concatenated information. The MAC layer is mainly used to select a combination of transmission formats, and implement functions related to scheduling and HARQ. The PHY layer is mainly used to provide an information transmission service for the MAC layer and a higher layer, and perform coding and modulation processing or decoding and demodulation processing according to the selected combination of transmission formats. Hereinafter, the same or similar scenario is not described any further.

For ease of description, hereinafter, the third protocol stack (including a part or all of protocol layers of a D2D protocol stack) is referred to as a quasi-D2D protocol stack. A manner of transmitting signals by using the second protocol stack in a device-to-device manner is referred to as a quasi-D2D manner. In addition, the quasi-D2D manner may be a D2D manner or any other manner of communication between devices, for example, a manner of communication between user equipments.

In this embodiment of the present invention, a plurality of aggregation levels may be implemented according to a structure (for example, a protocol layer of an included D2D protocol stack) of the quasi-D2D protocol stack, which, for example, may be aggregation of a user equipment side protocol stack (all protocol layers) and a PHY layer (a structure of the quasi-D2D protocol stack) of a D2D protocol stack, or may be aggregation of a user equipment side protocol stack and a PHY layer and a MAC layer (another structure of the quasi-D2D protocol stack) of a D2D protocol stack, or may be aggregation of a user equipment side protocol stack and a PHY layer, a MAC layer, an RLC layer, and the like (still another structure of the quasi-D2D protocol stack) of a D2D protocol stack.

Optionally, in this embodiment of the present invention, on the user equipment, the quasi-D2D protocol stack may be directly aggregated on at least one protocol layer of the user equipment side protocol stack by using an internal interface. Specifically, when a signal transmitted between the access node and the user equipment travels through the quasi-D2D protocol stack and the user equipment side protocol stack, if no conversion needs to be performed for the signal, the quasi-D2D protocol stack may be directly connected to the at least one protocol layer of the user equipment side protocol stack according to the specific structure (for example, a protocol layer included) of the quasi-D2D protocol stack. For example, exemplarily but not limitatively, if a quasi-D2D protocol stack includes a PHY layer, a MAC layer, and an RLC layer (or only the PHY layer is included, but functions of the MAC layer and the RLC layer are implemented by using an adaptation layer), the quasi-D2D protocol stack may be connected to a PDCP layer of a user equipment side protocol stack. If the quasi-D2D protocol stack only includes the PHY layer, the quasi-D2D protocol stack may be connected to the MAC layer of the user equipment side protocol stack, and share the PDCP layer, the RLC layer, and the MAC layer with the user equipment side protocol stack. It should be understood that, the above-described connection manner is only used for exemplary description, and the present invention is not limited thereto.

Using a case in which a user equipment sends a signal to a base station (for which the foregoing second protocol stack is set) as an example, the user processes, according to at least one protocol layer of the user equipment side protocol stack and the quasi-D2D protocol stack, information that needs to be sent to the base station, generates a signal that can be sent to the base station in a quasi-D2D manner, and sends the processed signal to the base station in the quasi-D2D manner by using a quasi-D2D air interface; and the base station parses the signal according to at least one protocol layer of the base station side protocol stack and the quasi-D2D protocol stack (the second protocol stack).

Using a case in which a user equipment receives a signal sent by a base station (for which the foregoing second protocol stack is set), the user equipment may receive, by using a quasi-D2D air interface in a quasi-D2D manner, a signal sent by the base station, and processes information from the base station and parses the signal according to at least one protocol layer of the user equipment side protocol stack and the quasi-D2D protocol stack.

Optionally, in this embodiment of the present invention, on the user equipment, a quasi-D2D protocol stack may also be aggregated on at least one protocol layer of the user equipment side protocol stack by using an adaptation layer. Therefore, that the third protocol stack is connected to the at least one protocol layer includes:
the third protocol stack being connected to the at least one protocol layer of the fourth protocol stack by using an adaptation layer, where the adaptation layer is used to perform conversion processing for a signal between the at least one protocol layer of the fourth protocol stack and the third protocol stack.

In addition, in this case, the receiving, by using a first uplink carrier, a first signal sent by an access node, and parsing the first signal according to at least one protocol layer of a fourth protocol stack and a third protocol stack may include:
receiving, by using the first uplink carrier, the first signal sent by the access node, and parsing the first signal according to the at least one protocol layer of the fourth protocol stack, the adaptation layer, and the third protocol stack; and/or
the generating a third signal according to the at least one protocol layer of the fourth protocol stack and the third protocol stack, and sending the third signal to the access node by using a first downlink carrier may include:
   generating the third signal according to the at least one protocol layer of the fourth protocol stack, the adaptation layer, and the third protocol stack, and sending the third signal to the access node by using the first downlink carrier.

Specifically, as shown in FIG. 2, when a signal transmitted between the access node and the user equipment travels through the quasi-D2D protocol stack and the user equipment side protocol stack, if conversion needs to be performed for the signal, for example, the PHY layer of the quasi-D2D protocol stack is adaptively connected to the PDCP layer of the user equipment side protocol stack, then information processing needs to be implemented between the two layers, and information of the quasi-D2D protocol stack is processed into information that can be received by the user equipment side protocol stack. In this way, according to the specific structure (for example, a protocol layer of an included device protocol stack) of the quasi-D2D protocol stack, the quasi-D2D protocol stack is connected to the at least one protocol layer of the user equipment side protocol stack by using the adaptation layer. For example, exemplarily but not limitatively, if a quasi-D2D protocol stack includes a PHY layer, a MAC layer, and an RLC layer, the quasi-D2D protocol stack may be connected to the PDCP layer of a user equipment side protocol stack only by using a signal conversion function of an adaptation layer. If the quasi-D2D protocol stack only includes the PHY layer, functions of the MAC layer and the RLC layer of the quasi-D2D protocol stack, and the signal conversion function may be implemented by using the adaptation layer; the quasi-D2D protocol stack may be connected to the PDCP layer of the user equipment side protocol stack, or the quasi-D2D protocol stack may be connected to the MAC layer of the user equipment side protocol stack by using the signal conversion function of the adaptation layer, and share the PDCP layer, the RLC layer, and the MAC layer with the user equipment side protocol stack. It should be understood that, the above-described connection manner is only used for exemplary description, and the present invention is not limited thereto.

Using a case in which a user equipment sends a signal to a base station (for which the foregoing second protocol stack is set) as an example, the user processes, according to at least one protocol layer of the user equipment side protocol stack, the adaptation layer, and the quasi-D2D protocol stack, information that needs to be sent to the base station, generates a signal that can be sent to the base station in a quasi-D2D manner, and sends the processed signal to the base station in the quasi-D2D manner by using a quasi-D2D air interface; and the base station parses the signal according to at least one protocol layer of the base station side protocol stack and the quasi-D2D protocol stack (the second protocol stack).

Using a case in which a user equipment receives a signal sent by a base station (for which the foregoing second protocol stack is set), the user equipment may receive, by using a quasi-D2D air interface in a quasi-D2D manner, a signal sent by the base station, and processes information from the base station and parses the signal according to at least one protocol layer of the user equipment side protocol stack, the adaptation layer, and the quasi-D2D protocol stack.

In this way, by setting an adaptation layer, conversion of a signal between a quasi-D2D protocol stack and a user equipment side protocol stack can be ensured, and communication between user equipments can be implemented in cooperation with the quasi-D2D protocol stack according to a requirement. Therefore, configuration of the quasi-D2D protocol stack is more flexible.

The following describes a specific process of communication, according to the quasi-D2D protocol stack, between the Node C (for which the quasi-D2D protocol stack and the base station protocol stack are set) and the user equipment (hereinafter, unless otherwise specified, referred to as the user equipment for short) for which both the quasi-D2D protocol stack and the user equipment side protocol stack are set.

Optionally, in this embodiment of the present invention, in normal cases, the user equipment may communicate with the base station (the access node) according to the user equipment side protocol stack. That is, in addition to the receiving, by using a first uplink carrier, a first signal sent by an access node, and parsing the first signal according to at least one protocol layer of a fourth protocol stack and a third protocol stack, the method further includes:
receiving, by using the first downlink carrier, a fifth signal sent by the access node, and parsing the fifth signal according to the fourth protocol stack; and/or
in addition to the generating a third signal according to the at least one protocol layer of the fourth protocol stack and the third protocol stack, and sending the third signal to the access node by using a first downlink carrier, the method further includes:
   generating a sixth signal according to the fourth protocol stack, and sending the sixth signal to the access node by using the first uplink carrier.

In this embodiment of the present invention, the process of communication, between the user equipment and the base station (the access node) according to the user equipment side protocol stack is the same as that in the prior art, which is not described herein any further.

In addition, in this embodiment of the present invention, the user equipment may request the Node C to perform signal transmission in a quasi-D2D manner; according to the request, the Node C may immediately activate the quasi-D2D protocol stack and perform signal transmission to the user equipment in the quasi-D2D manner, or may determine, according to the request, whether the foregoing activation request is satisfied, and activate the quasi-D2D protocol stack and perform signal transmission to the user equipment in the quasi-D2D manner in a case in which the foregoing activation condition is satisfied. Therefore, before the receiving, by using a first uplink carrier, a first signal sent by an access node, and parsing the first signal according to at least one protocol layer of a fourth protocol stack and a third protocol stack, the method further includes:
sending a first message to the access node, where the first message carries information that requests access node to send a signal by using the first uplink carrier; and/or
before the generating a third signal according to the at least one protocol layer of the fourth protocol stack and the third protocol stack, and sending the third signal to the access node by using a first downlink carrier, the method further includes:
   sending a second message to the access node, where the second message carries information that requests access node to receive a signal by using the first downlink carrier.

In addition, in this embodiment of the present invention, the user equipment may also activate the third protocol stack according to an instruction of the Node C, and perform a related process in step S210 and/or step S220, that is, receive, by using the first uplink carrier, a signal sent by the Node C, and/or send a signal to the Node C by using the first downlink carrier. Therefore, in this embodiment of the present invention, the method further includes:
if a third message sent by the access node is received, where the third message carries information that instructs to receive a signal sent by the access node by using the first uplink carrier, determining to receive the signal sent by the access node by using the first uplink carrier; and/or
if a fourth message sent by the access node is received, where the fourth message carries information that instructs to send a signal to the access node by using the first downlink carrier, determining to send the signal to the access node by using the first downlink carrier.

Specifically, in this embodiment of the present invention, optionally, the Node C may send scheduling information for instructing the user equipment to receive a signal by using the first uplink carrier; where: the scheduling information includes at least one among a modulation and coding scheme (MSC, Modulation and Coding Scheme), a subband, transmit power, a demodulation reference signal (DM RS, DeModulation Reference Signal), and the like that are used when a signal is sent to the receive end by using the first uplink carrier and according to at least one protocol layer of the first protocol stack and the second protocol stack, so that the UE receives, according to the scheduling information, a signal sent by the Node C by using the first uplink carrier and according to at least one protocol layer of the first protocol stack and the second protocol stack; and/or the scheduling information includes at least one among the modulation and coding scheme, the subband, the transmit power, the demodulation reference signal, and the like that are used when a signal sent by the receive end is received by using the first downlink carrier and according to the at least one protocol layer and the second protocol stack, so that the UE sends, according to the scheduling information, a signal to the Node C by using the first downlink carrier and according to at least one protocol layer of the first protocol stack and the second protocol stack.

In addition, optionally, in this embodiment of the present invention, after it is determined that a signal needs to be sent to the receive end by using the first uplink carrier, and/or that a signal sent by the receive end needs to be received by using the first downlink carrier, the Node C may further send an activation message to the user equipment, so that the user equipment activates the quasi-D2D protocol stack and performs signal transmission to the Node C in the quasi-D2D manner.

In this way, signal transmission can be flexibly performed in the quasi-D2D manner, thereby improving the transmission efficiency.

Subsequently, in S210, a first signal sent by an access node is received by using a first uplink carrier, and the first signal is parsed according to at least one protocol layer of a fourth protocol stack and a third protocol stack; and
in S220, a third signal is generated according to the at least one protocol layer of the fourth protocol stack and the third protocol stack, and the third signal is sent to the access node by using a first downlink carrier.

Specifically, when the Node C sends a signal to the user equipment, the Node C may acquire data from the core network by using the S1 interface, and processes the data from the core network according to at least the PDCP layer (whether another protocol layer is included is determined according to a specific structure of quasi-D2D) of the base station protocol stack and the quasi-D2D protocol stack (whether according to an adaptation layer may be selected according to the structure of quasi-D2D), generates data (hereinafter referred to as first mode data) that can be communicated with the user equipment in a quasi-D2D manner, and sends the first mode data to the user equipment by using the first uplink carrier. After receiving the first mode data, the user equipment processes the first mode data according to the quasi-D2D protocol stack (whether according to an adaptation layer may be selected according to the structure of quasi-D2D) and at least the PDCP layer (whether another protocol layer is included is determined according to a specific structure of quasi-D2D) of the user equipment side protocol stack.

In addition, in this embodiment of the present invention, the user equipment may receive, by using the first downlink carrier that forms a carrier pair with the first uplink carrier and according to the user equipment side protocol stack, second mode data that is sent by the Node C and transmitted in a base station-to-user equipment manner, where the second mode data is data (hereinafter referred to as the second mode data) transmitted between the base station and the user equipment.

In this way, a transmission rate can be further improved.

When the user equipment sends a signal to the Node C, the user equipment processes data (the signal) according to the quasi-D2D protocol stack and at least the PDCP layer of the user equipment side protocol stack, generates first mode data, and sends the first mode data to the Node C by using the first downlink carrier. Afterwards, the Node C processes the first mode data according to the quasi-D2D protocol stack and at least the PDCP layer (whether another protocol layer is included is determined according to a specific structure of quasi-D2D) of the base station protocol stack, generates data that can be sent to the core network, and sends the data to the core network side by using the S1 interface.

In addition, in this embodiment of the present invention, the user equipment may send, by using the first uplink carrier that forms a carrier pair with the first downlink carrier and according to the user equipment side protocol stack, data (the second mode data) transmitted in a user equipment-to-base station manner to the Node C.

In this way, the transmission rate can be further improved.

In addition, in this embodiment of the present invention, the first uplink carrier and the first downlink carrier may belong to a same FDD carrier pair, or may belong to different FDD carrier pairs.

Optionally, in this embodiment of the present invention, the method further includes:
receiving, by using a second downlink carrier, a second signal sent by the access node, and parsing the second signal according to the fourth protocol stack; and/or
generating a fourth signal according to the fourth protocol stack, and sending the fourth signal to the access node by using a second uplink carrier.

Specifically, the user equipment may send the foregoing second mode data to the Node C by using the second uplink carrier and according to the user equipment side protocol stack.

In addition, the user equipment may also receive, by using the second downlink carrier and according to the user equipment side protocol stack, the foregoing second mode data sent by the Node C.

In this way, the transmission rate can be further improved.

In addition, the signal (the first signal) sent by the Node C to the user equipment by using the first uplink carrier and the signal (the second signal) sent by the Node C to the user equipment by using the second downlink carrier may correspond to the same data or correspond to different data. Likewise, the signal (the third signal) that is sent by the user equipment and received by the Node C by using the first downlink carrier and the signal (the fourth signal) that is sent by the user equipment and received by the Node C by using the second uplink carrier may correspond to the same data or correspond to different data.

Therefore, if the first signal and the second signal correspond to the same data, the Node C needs to explicitly or implicitly notify the user equipment that the data sent and received by the Node C in different protocol stack manners (the base station protocol stack and the quasi-D2D protocol stack) corresponds to the same data, so as to ensure that the user equipment is capable of completely and continuously receiving data of the same data. In addition, if the third signal and the fourth signal correspond to the same data, the Node C also needs to explicitly or implicitly notify the user equipment so that the user equipment performs transmission according to the same data. That is, optionally, in this embodiment of the present invention, the method further includes:
determining that the first signal and the second signal correspond to the same data; and/or
determining that the third signal and the fourth signal correspond to the same data.

In addition, in this embodiment of the present invention, to ensure continuity of data transmission, the Node C may notify the user equipment that the first signal and the second signal correspond to the same data and/or the third signal and the fourth signal correspond to the same data. That is, the determining that the first signal and the second signal correspond to the same data includes:
if a fifth message sent by the access node is received, where the fifth message carries information indicating that the first signal and the second signal correspond to the same data, determining that the first signal and the second signal correspond to the same data; and/or
the determining that the third signal and the fourth signal correspond to the same data includes:
   if a sixth message sent by the access node is received, where the sixth message carries information indicating that the third signal and the fourth signal correspond to the same data, determining that the third signal and the fourth signal correspond to the same data.

Specifically, the Node C may notify, by using high-level signaling such as Radio Resource Control protocol (RRC, Radio Resource Control) signaling, the user equipment that the second mode data sent by the Node C to the user equipment according to the base station protocol stack and the first mode data sent by the Node C to the user equipment according to the quasi-D2D protocol stack correspond to the same data, and that only the transmission manner is changed, so that the user equipment can receive data according to the same data. The user equipment considers that the data received in different manners is a data packet corresponding to the same data. The above-described RRC signaling as the high-level signaling is for illustrative description in an embodiment of the present invention, and the present invention is not limited thereto. Hereinafter, the same or similar scenario is not described any further.

Described above is that the Node C notifies, in a manner of sending an indication message (the fifth message and/or the sixth message) to the user equipment, the user equipment that the first signal and the second signal correspond to the same data and/or that the third signal and the fourth signal correspond to the same data. However, the present invention is not limited thereto, and all other manners that enable the user equipment to determine that the first signal and the second signal correspond to the same data and/or that the third signal and the fourth signal correspond to the same data, to ensure continuity of communication shall fall within the protection scope of the present invention. For example, it may also be determined in an initial stage of establishing a communication connection, or in a case in which the user equipment is predefined to use the foregoing two manners (receiving, by separately using the uplink carrier and the downlink carrier, a signal sent by the Node C, and/or sending a signal to the Node C by separately using the downlink carrier and the uplink carrier) to determine, that the first signal and the second signal correspond to the same data and/or that the third signal and the fourth signal correspond to the same data. Therefore, in this embodiment of the present invention, the determining that the first signal and the second signal correspond to the same data includes:
when sending a signal to the receive end by using the first uplink carrier and the second downlink carrier, determining that the first signal and the second signal correspond to the same data; and/or
the determining that the third signal and the fourth signal correspond to the same data includes:
   when receiving, by using the first downlink carrier and the second uplink carrier, a signal sent by the receive end, determining that the third signal and the fourth signal correspond to the same data.

In addition, in the foregoing embodiment, the first uplink carrier and the second downlink carrier may belong to the same FDD carrier pair, or may belong to different FDD carrier pairs. The second uplink carrier and the first downlink carrier may belong to the same FDD carrier pair, or may belong to different FDD carrier pairs. In addition, the first uplink carrier and the second uplink carrier may be the same or different, and the first downlink carrier and the second downlink carrier may be the same or different. The present invention set no limitation thereto.

In addition, scheduling information (for example, at least one among the used modulation and coding scheme, the used subband, the used transmit power, the demodulation reference signal configuration, and the like) of a data packet borne on the uplink carrier may be completely independent of, or may be related to scheduling information of a data packet borne on the downlink carrier. For example, the two data packets use a same DM RS configuration, or even may be a same data packet, so that the UE needs to connect and then decode the signals received on the uplink carrier and the downlink carrier, which may be understood as a scheduling manner of connecting the uplink and downlink carriers to form one carrier.

In this way, in a case in which the Node C sends a signal to the user equipment by separately using the uplink carrier and the downlink carrier, and/or receives, by separately using the downlink carrier and the uplink carrier, a signal sent by the user equipment, continuity of the communication can be ensured.

In this embodiment of the present invention, the receiving, by using a first uplink carrier, a first signal sent by an access node, and parsing the first signal according to at least one protocol layer of a fourth protocol stack and a third protocol stack includes:
receiving, by using the first uplink carrier in at least one timeslot in a time division multiplexing manner, the first signal sent by the access node, and parsing the first signal according to the at least one protocol layer of the fourth protocol stack and the third protocol stack; and/or
the generating a third signal according to the at least one protocol layer of the fourth protocol stack and the third protocol stack, and sending the third signal to the access node by using a first downlink carrier includes
generating the third signal in at least one timeslot in a time division multiplexing manner according to the at least one protocol layer of the fourth protocol stack and the third protocol stack, and sending the third signal to the access node by using the first downlink carrier.

Specifically, in this embodiment of the present invention, the Node C may send, by using the first uplink carrier in the first timeslot in the time division multiplexing (TDM, Time Division Multiplexing) manner, a signal to a user equipment (hereinafter referred to as a first-category user equipment) for which a quasi-D2D protocol stack is set, and receive, by using the first uplink carrier in a timeslot except (before or after) the first timeslot, a signal sent by a user equipment (which may include the foregoing first-category user equipment, or may include a user equipment for which no quasi-D2D protocol stack is set, hereinafter referred to as a second-category user equipment) served by the Node C.

In addition, the Node C may also receive, by using the first downlink carrier in a second timeslot in the TDM manner, a signal sent by the first-category user equipment, and send, by using the first downlink carrier in a timeslot except (before or after) the second timeslot, a signal to the user equipment (which may include the foregoing first-category user equipment, or may include the second-category user equipment) served by the Node C.

In this way, signal transmission is performed in the TDM manner, and capacities of uplink and downlink channels can be conveniently and dynamically allocated by adjusting a timeslot interchange point, which is therefore ideal for communication of asymmetric services and suitable for an environment in which uplink and downlink services are asymmetric.

In addition, in this embodiment of the present invention, the method further includes:
determining receive/transmit transition time before and/or after the at least one timeslot according to a seventh message that is sent by the access node and carries information that indicates the receive/transmit transition time before and/or after the at least one timeslot.

Specifically, the Node C may determine receive/transmit transition time of the Node C on the uplink and downlink carriers according to a link channel condition for signal transmission between the Node C and the user equipment in a base station-to-user equipment manner and a link channel condition for signal transmission between the Node C and the user equipment in a quasi-D2D manner, such as a channel delay and a range of interference generated. For example, if a channel delay of a quasi-D2D link is longer, and the range of interference is larger, a longer protection duration may be needed. When the link channel condition changes, the receive/transmit transition time also needs to be adjusted, so that the receive/transmit transition time can be dynamically adjusted when the Node C dynamically transmits signals to different user equipments in the quasi-D2D manner. That is, the Node C may dynamically determine the receive/transmit transition time, for example, 1 symbol or 2 symbols, according to an actual service requirement. In addition, the Node C notifies the user equipment (including the first-category user equipment) served by the Node C of the information. It should be understood that, the above-described transition time and its specific value are only an embodiment of the present invention, and all other parameters and their values that can enable the user equipment to correctly identify a time interval between the time when an uplink carrier bears a downlink signal and the time when the uplink carrier bears an uplink signal (or a time interval between the time when a downlink carrier bears an uplink signal and the time when the downlink carrier bears a downlink signal) or a time interval between the time when an uplink carrier bears an uplink signal and the time when the uplink carrier bears a downlink signal (or a time interval between the time when a downlink carrier bears a downlink signal and the time when the downlink carrier bears an uplink signal) shall fall within the protection scope of the present invention.

In addition, in this embodiment of the present invention, the method further includes:
determining, according to an eighth message that is sent by the access node and carries information indicating that a subframe corresponding to the first uplink carrier in the at least one timeslot is a first dedicated subframe, that the access node does not receive a signal in the first timeslot by using the first uplink carrier; and/or
determining, according to a ninth message that is sent by the access node and carries information indicating that a subframe corresponding to the first downlink carrier in the at least one timeslot is a second dedicated subframe, that the access node does not send a signal in the first timeslot by using the first downlink carrier.

Specifically, when the Node C activates the quasi-D2D protocol stack, the Node C may no longer send a downlink signal such as a pilot signal in some downlink subframes (at least including downlink subframes that use the quasi-D2D protocol stack), or may no longer receive, in some uplink subframes (at least including uplink subframes that use the quasi-D2D protocol stack), a signal sent by the user equipment (including the first-category user equipment and the second-category user equipment). To ensure that all user equipments can normally work, the Node C needs to notify the user equipment served by the base station that the corresponding subframe is a dedicated subframe. In this way, the user equipment determines that the Node C does not receive a signal in the first timeslot by using the first uplink carrier, or the user equipment determines that the Node C does not send a signal in the first timeslot by using the first downlink carrier.

In addition, in this embodiment of the present invention, the Node C may dynamically set the subframe corresponding to the first downlink carrier in the second timeslot to a multicast broadcast single frequency network (MBSFN, Multicast Broadcast Single Frequency Network) subframe.

The Node C may dynamically set a subframe for transmitting or receiving a signal in a quasi-D2D manner, so as to dynamically configure the subframe corresponding to the first uplink carrier in the first timeslot as the first dedicated subframe, and/or configure the subframe corresponding to the first downlink carrier in the second timeslot as the second dedicated subframe. The eighth message and/or the ninth message may be notified by means of high-level signaling such as RRC signaling. For example, the Node C may dynamically configure the MBSFN subframe by using the RRC signaling and send configuration information of the MBSFN subframe to the user equipment.

In this embodiment, the signal includes data and/or control signaling, and therefore processing for the signal includes processing for the data and/or processing for the control signaling.

According to a signal transmission method provided in this embodiment of the present invention, a quasi-D2D protocol stack is activated according to a requirement, so that a Node C sends a signal to a user equipment by using an uplink carrier, and/or receives, by using a downlink carrier, a signal sent by the user equipment. In this way, an access node can flexibly use uplink and downlink carriers, so that the access node can perform signal transmission to the user equipment by using a carrier wider than a bandwidth of the uplink and downlink carriers that is specified in FDD. For example, when an access node is capable of sending signals on the uplink carrier to a user equipment by using 50% of the time, theoretically, a downlink data rate of the access node may be correspondingly improved by 50%.

As described above, with reference to FIG. 1 to FIG. 4, the signal transmission method according to an embodiment of the present invention is described in detail. Hereinafter, with reference to FIG. 5 to FIG. 6, a signal transmission apparatus according to an embodiment of the present invention is described in detail.

FIG. 5 is a schematic block diagram of an apparatus 300 for establishing a communication connection according to an embodiment of the present invention. As shown in FIG. 5, the apparatus 300 includes:
a processor 310, configured to: according to at least one protocol layer of a first protocol stack for implementing communication between a base station and a user equipment on a base station side and a second protocol stack for implementing communication between devices, generate a first signal or parse a third signal received by a receiving unit;
a sending unit 320, configured to send, by using a first uplink carrier, the first signal generated by the processor to a receive end; and/or
a receiving unit 330, the receiving unit, configured to receive, by using a first downlink carrier, the third signal sent by the receive end; where
the second protocol stack is connected to the at least one protocol layer of the first protocol stack.

Optionally, in this embodiment of the present invention, the processor 310 is further configured to: if a ratio of load of the first downlink carrier to a capacity of the first downlink carrier exceeds a first threshold, or if load of the first uplink carrier is lower than a capacity of the first uplink carrier, or if a first message sent by the receive end is received, where the first message carries information that requests to use the first uplink carrier to send a signal to the receive end, determine to send the signal to the receive end by using the first uplink carrier; and/or
configured to: if a ratio of load of the first uplink carrier to a capacity of the first uplink carrier exceeds a second threshold, or if load of the first downlink carrier is lower than a capacity of the first downlink carrier, or if a second message sent by the receive end is received, where the second message carries information that requests to use the first downlink carrier to receive a signal sent by the receive end, determine to receive, by using the first downlink carrier, the signal sent by the receive end.

In this way, signal transmission can be flexibly performed in a quasi-D2D manner according to bearing conditions of the uplink and downlink carriers and a user requirement, thereby improving the transmission efficiency.

Optionally, in this embodiment of the present invention, the sending unit 320 is further configured to send a third message to the receive end, where the third message carries information that instructs the receive end to receive a signal by using the first uplink carrier; and/or
configured to send a fourth message to the receive end, where the fourth message carries information that instructs the receive end to send a signal by using the first downlink carrier.

Optionally, in this embodiment of the present invention, the sending unit 320 is further configured to send the first signal to the receive end by using the first uplink carrier and using transmit power less than or equal to a third threshold.

In addition, the third threshold includes transmit power of the user equipment.

In this way, it is ensured that small interference is generated when the Node C sends the foregoing first mode data to the user equipment by using the uplink carrier.

Optionally, in this embodiment of the present invention, the processor 310 is further configured to: according to the first protocol stack, generate a second signal or parse a fourth signal received by the receiving unit;
the sending unit 320 is further configured to send, by using a second downlink carrier, the second signal generated by the processor to the receive end; and/or
the receiving unit 330 is further configured to receive, by using a second uplink carrier, the fourth signal sent by the receive end.

In this way, a transmission rate can be further improved.

Optionally, in this embodiment of the present invention, the processor 310 is further configured to determine that the first signal and the second signal correspond to the same data; and/or
configured to determine that the third signal and the fourth signal correspond to the same data.

In addition, the sending unit 320 is further configured to send a fifth message to the receive end, where the fifth message carries information indicating that the first signal and the second signal correspond to the same data; and/or
configured to send a sixth message to the receive end, where the sixth message carries information indicating that the third signal and the fourth signal correspond to the same data.

In this way, in a case in which the Node C sends a signal to the user equipment by separately using the uplink carrier and the downlink carrier, and/or receives, by separately using the downlink carrier and the uplink carrier, a signal sent by the user equipment, continuity of the communication can be ensured.

Optionally, in this embodiment of the present invention, the sending unit 320 is further configured to send the first signal to the receive end by using the first uplink carrier in at least one timeslot in a time division multiplexing manner; and/or
the receiving unit 330 is further configured to receive, by using the first downlink carrier in at least one timeslot in a time division multiplexing manner, the third signal sent by the receive end.

In this way, signal transmission is performed in the TDM manner, and capacities of uplink and downlink channels can be conveniently and dynamically allocated by adjusting a timeslot interchange point, which is therefore ideal for communication of asymmetric services and suitable for an environment in which uplink and downlink services are asymmetric.

Optionally, in this embodiment of the present invention, the sending unit 320 is further configured to send a seventh message, where the seventh message carries information that indicates receive/transmit transition time before and/or after the at least one timeslot.

Optionally, in this embodiment of the present invention, the sending unit 320 is further configured to send an eighth message, where the eighth message carries information indicating that a subframe corresponding to the first uplink carrier in the at least one timeslot is a first dedicated subframe; and/or
configured to send a ninth message, where the ninth message carries information indicating that a subframe corresponding to the first downlink carrier in the at least one timeslot is a second dedicated subframe.

Optionally, in this embodiment of the present invention, the processor 310 is further configured to: according to the at least one protocol layer of the first protocol stack and at least one second protocol stack, generate the first signal or parse the third signal received by the receiving unit;
the sending unit 320 is configured to send, by using the first uplink carrier, the first signal generated by the processor to the receive end, where one second protocol stack corresponds to one first signal, and corresponds to at least one receive end; and/or
the receiving unit 330 is configured to receive, by using the first downlink carrier, the third signal sent by the receive end, where one second protocol stack corresponds to one third signal, and corresponds to at least one receive end.

In this way, the access node may simultaneously serve a plurality of user equipments for which the third protocol stack is set, and an appropriate quasi-D2D protocol stack may be selected according to settings of the third protocol stack of the user equipment, thereby accommodating different configurations of the third protocol stack of the user equipment.

Optionally, in this embodiment of the present invention, the processor 310 is further configured to: according to the first protocol stack, generate a fifth signal or parse a sixth signal received by the receiving unit;
the sending unit 320 is further configured to send, by using the first downlink carrier, the fifth signal to the receive end; and/or
the receiving unit 330 is further configured to receive, by using the first uplink carrier, the sixth signal sent by the receive end.

Optionally, in the embodiment of the present invention, the second protocol stack and the first protocol stack are set together for a first access network entity; or
the first protocol stack is set for a first access network entity, and the second protocol stack is set for a second access network entity connected to the first access network entity.

Optionally, in this embodiment of the present invention, the second protocol stack is connected to the at least one protocol layer of the first protocol stack by using an adaptation layer, where the adaptation layer is used to perform conversion processing for a signal between the at least one protocol layer of the first protocol stack and the second protocol stack.

In addition, the first protocol stack includes a base station protocol stack, and the at least one protocol layer of the first protocol stack at least includes a Packet Data Convergence Protocol PDCP layer of the base station protocol stack; and/or
the second protocol stack at least includes a physical layer of a device-to-device protocol stack.

In this way, by setting an adaptation layer, conversion of a signal between a quasi-D2D protocol stack and a base station protocol stack can be ensured, and communication between user equipments can be implemented in cooperation with the quasi-D2D protocol stack according to a requirement. Therefore, configuration of the quasi-D2D protocol stack is more flexible.

According to a signal transmission apparatus provided in this embodiment of the present invention, a quasi-D2D protocol stack is activated, so that a Node C sends a signal to a user equipment by using an uplink carrier, and/or receives, by using a downlink carrier, a signal sent by the user equipment. In this way, an access node can flexibly use the uplink and downlink carriers, so that the access node can perform signal transmission to the user equipment by using a carrier wider than a bandwidth of the uplink and downlink carriers that is specified in FDD. In this way, a data rate from the access node to the user equipment is improved.

The signal transmission apparatus 300 provided in this embodiment of the present invention may correspond to an access node (for example, Node C) in a method according to an embodiment of the present invention. In addition, units and modules in the signal transmission apparatus 300 and the foregoing operations and/or functions separately implement corresponding processes in the method 100 in FIG. 1, which are not described herein any further for brevity of description.

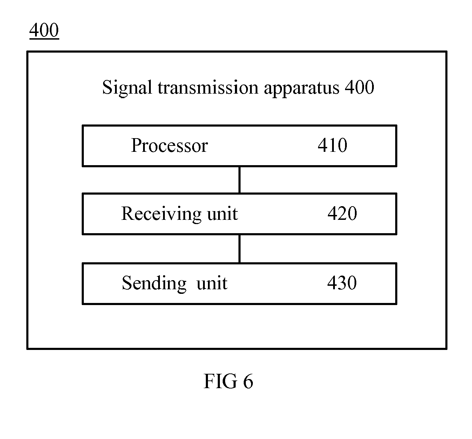

FIG. 6 is a schematic block diagram of an apparatus 400 for establishing a communication connection according to an embodiment of the present invention. As shown in FIG. 6, the apparatus 400 includes:
a processor 410, configured to: according to at least one protocol layer of a fourth protocol stack for implementing communication between a base station and a user equipment on a user equipment side and a third protocol stack for implementing communication between devices, parse a first signal received by a receiving unit or generate a second signal;
a receiving unit 420, configured to receive, by using a first uplink carrier, the first signal sent by an access node; and/or
a sending unit 430, configured to send, by using a first downlink carrier, the second signal generated by the processor to the access node; where
the third protocol stack is connected to the at least one protocol layer of the fourth protocol stack.

Optionally, in this embodiment of the present invention, the sending unit 430 is further configured to send a first message to the access node, where the first message carries information that requests access node to send a signal by using the first uplink carrier; and/or
configured to send a second message to the access node, where the second message carries information that requests access node to receive a signal by using the first downlink carrier.

Optionally, in this embodiment of the present invention, the processor 410 is further configured to: if a third message sent by the access node is received, where the third message carries information that instructs to receive a signal sent by the access node by using the first uplink carrier, determine to receive the signal sent by the access node by using the first uplink carrier; and/or
configured to: if a fourth message sent by the access node is received, where the fourth message carries information that instructs to send a signal to the access node by using the first downlink carrier, determine to send the signal to the access node by using the first downlink carrier.

Optionally, in this embodiment of the present invention, the processor 410 is further configured to: according to the fourth protocol stack, parse the second signal received by the receiving unit or generate a fourth signal;
the receiving unit 420 is further configured to receive, by using a second downlink carrier, the second signal sent by the access node; and/or
the sending unit 430 is further configured to send, by using a second uplink carrier, the fourth signal generated by the processor to the access node.

In this way, a transmission rate can be further improved.

Optionally, in this embodiment of the present invention, the processor 410 is further configured to determine that the first signal and the second signal correspond to the same data; and/or
configured to determine that the third signal and the fourth signal correspond to the same data.

Optionally, in this embodiment of the present invention, the processor 410 is further configured to: if a fifth message sent by the access node is received, where the fifth message carries information indicating that the first signal and the second signal correspond to the same data, determine that the first signal and the second signal correspond to the same data; and/or
configured to: if a sixth message sent by the access node is received, where the sixth message carries information indicating that the third signal and the fourth signal correspond to the same data, determine that the third signal and the fourth signal correspond to the same data.

In this way, in a case in which the Node C sends a signal to the user equipment by separately using the uplink carrier and the downlink carrier, and/or receives, by separately using the downlink carrier and the uplink carrier, a signal sent by the user equipment, continuity of the communication can be ensured.

Optionally, in this embodiment of the present invention, the receiving unit 420 is further configured to receive, by using the first uplink carrier in at least one timeslot in a time division multiplexing manner, the first signal sent by the access node; and/or
the sending unit 430 is further configured to send the third signal to the access node by using the first downlink carrier in at least one timeslot in a time division multiplexing manner.

In this way, signal transmission is performed in the TDM manner, and capacities of uplink and downlink channels can be conveniently and dynamically allocated by adjusting a timeslot interchange point, which is therefore ideal for communication of asymmetric services and suitable for an environment in which uplink and downlink services are asymmetric.

Optionally, in this embodiment of the present invention, the processor 410 is further configured to determine receive/transmit transition time before and/or after the at least one timeslot according to a seventh message that is sent by the access node and carries information that indicates the receive/transmit transition time before and/or after the at least one timeslot.

Optionally, in this embodiment of the present invention, the processor 410 is further configured to determine, according to an eighth message that is sent by the access node and carries information indicating that a subframe corresponding to the first uplink carrier in the at least one timeslot is a first dedicated subframe, that the access node does not receive a signal in the first timeslot by using the first uplink carrier; and/or
configured to determine, according to a ninth message that is sent by the access node and carries information indicating that a subframe corresponding to the first downlink carrier in the at least one timeslot is a second dedicated subframe, that the access node does not send a signal in the first timeslot by using the first downlink carrier. Optionally, in this embodiment of the present invention, the processor 410 is further configured to: according to the fourth protocol stack, parse a fifth signal received by the receiving unit or generate a sixth signal;
the receiving unit 420 is further configured to receive, by using the first downlink carrier, the fifth signal sent by the access node; and/or
the sending unit 430 is further configured to send, by using the first uplink carrier, the sixth signal to the receive end.

Optionally, in this embodiment of the present invention, the third protocol stack is connected to the at least one protocol layer of the fourth protocol stack by using an adaptation layer, where the adaptation layer is used to perform conversion processing for a signal between the at least one protocol layer of the fourth protocol stack and the third protocol stack.

In addition, the fourth protocol stack includes a user equipment side protocol stack, and the at least one protocol layer of the fourth protocol stack at least includes a Packet Data Convergence Protocol PDCP layer of the user equipment side protocol stack; and/or
the third protocol stack at least includes a physical layer of a device-to-device protocol stack.

In this way, by setting an adaptation layer, conversion of a signal is converted between a quasi-D2D protocol stack and a user equipment side protocol stack can be ensured, and communication between user equipments can be implemented by combining the adaptation layer and the quasi-D2D protocol stack according to a requirement. Therefore, configuration of the quasi-D2D protocol stack is more flexible.

According to a signal transmission apparatus provided in this embodiment of the present invention, a quasi-D2D protocol stack is activated, so that a Node C sends a signal to a user equipment by using an uplink carrier in a quasi-D2D manner, and/or receives, by using a downlink carrier, a signal sent by the user equipment. In this way, an access node can flexibly use the uplink and downlink carriers, so that the access node can perform signal transmission to the user equipment by using a carrier wider than a bandwidth of the uplink and downlink carriers that is specified in FDD. In this way, a data rate for communication between the access node and the user equipment is improved.

The signal transmission apparatus 400 provided in this embodiment of the present invention may correspond to an access node (for example, Node C) in a method according to an embodiment of the present invention. In addition, units and modules in the signal transmission apparatus 400 and the foregoing operations and/or functions separately implement corresponding processes in the method 200 in FIG. 4, which are not described herein any further for brevity of description.

In addition, in the foregoing description, the quasi-D2D protocol stack (the second protocol stack) that is set for the Node C (the access node) and the quasi-D2D protocol stack (the third protocol stack) that is set for the user equipment may be the same, or may be in a primary and secondary relationship, which is not specifically limited in the present invention.

In addition, in the foregoing description, a signal may include data, information, control signaling, and the like, which is not specifically limited in the present invention.

In addition, in the foregoing description, the second protocol stack and the third protocol stack may be the same or different (that is, a pair of corresponding (for example, in a primary and secondary relationship) protocol stacks for implementing signal transmission in a user equipment-to-user equipment manner), which is not specifically limited in the present invention.

In addition, the signal transmission method and apparatus in the embodiments of the present invention may be applied in a single-carrier scenario, or may be applied in a multi-carrier scenario. That is, as described above, the first carrier and the second carrier may be a same carrier (corresponding to the single-carrier application scenario) or different carriers (corresponding to the multi-carrier application scenario), and the first uplink carrier and the first downlink carrier may belong to a same carrier pair (corresponding to the single-carrier application scenario) or different carrier pairs (corresponding to the multi-carrier application scenario).

In addition, in the embodiments of the present invention, the receive end that receives a signal by using the first uplink carrier and the receive end that sends a signal by using the first downlink carrier may be a same receive end or different receive ends, which is not specifically limited in the present invention.

In addition, in the embodiments of the present invention, functions implemented by the foregoing processor may be implemented by a dedicated integrated circuit or the like, which is not specifically limited in the present invention.

It should be understood that, the term "and/or" in the specification describes only an association relationship for describing associated objects and represents that three relationships may exist. For example, A and/or B may represent the following three cases: Only A exists, both A and B exist, and only B exists. In addition, the character "/" in the specification generally indicates an "or" relationship between the associated objects.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processor, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A signal transmission method, wherein the method comprises:
generating a first signal according to at least one protocol layer of a first protocol stack and a second protocol stack, and sending the first signal to a receive end by using a first uplink carrier; and/or
receiving, by using a first downlink carrier, a third signal sent by the receive end, and parsing the third signal according to the at least one protocol layer of the first protocol stack and the second protocol stack; wherein
the first protocol stack is used to implement communication between a base station and a user equipment on a base station side, the second protocol stack is used to implement communication between devices, and the second protocol stack is connected to the at least one protocol layer of the first protocol stack.

2. The method according to claim 1, wherein the method further comprises:
if a ratio of load of the first downlink carrier to a capacity of the first downlink carrier exceeds a first threshold, or if load of the first uplink carrier is lower than a capacity of the first uplink carrier, or if a first message sent by the receive end is received, wherein the first message carries information that requests to use the first uplink carrier to send a signal to the receive end, determining to send the signal to the receive end by using the first uplink carrier; and/or
if a ratio of load of the first uplink carrier to a capacity of the first uplink carrier exceeds a second threshold, or if load of the first downlink carrier is lower than a capacity of the first downlink carrier, or if a second message sent by the receive end is received, wherein the second message carries information that requests to use the first downlink carrier to receive a signal sent by the receive end, determining to receive, by using the first downlink carrier, the signal sent by the receive end.

3. The method according to claim 1, wherein before the sending the first signal to a receive end by using a first uplink carrier, the method further comprises:
sending a third message to the receive end, wherein the third message carries information that instructs the receive end to receive a signal by using the first uplink carrier; and/or
before the receiving, by using a first downlink carrier, a third signal sent by the receive end, the method further comprises:
sending a fourth message to the receive end, wherein the fourth message carries information that instructs the receive end to send a signal by using the first downlink carrier.

4. The method according to claim 1, wherein the sending the first signal to a receive end by using a first uplink carrier comprises:
sending the first signal to the receive end by using the first uplink carrier and using transmit power less than or equal to a third threshold.

5. The method according to claim 4, wherein the third threshold comprises transmit power of the user equipment.

6. The method according to claim 1, wherein the method further comprises:
generating a second signal according to the first protocol stack, and sending the second signal to the receive end by using a second downlink carrier; and/or
receiving, by using a second uplink carrier, a fourth signal sent by the receive end, and parsing the fourth signal according to the first protocol stack.

7. The method according to claim 6, wherein the method further comprises:
determining that the first signal and the second signal correspond to the same data; and/or
determining that the third signal and the fourth signal correspond to the same data.

8. The method according to claim 7, wherein the method further comprises:
sending a fifth message to the receive end, wherein the fifth message carries information indicating that the first signal and the second signal correspond to the same data; and/or
sending a sixth message to the receive end, wherein the sixth message carries information indicating that the third signal and the fourth signal correspond to the same data.

9. The method according to claim 1, wherein the generating a first signal according to at least one protocol layer of a first protocol stack and a second protocol stack, and sending the first signal to a receive end by using a first uplink carrier comprises:
generating the first signal in at least one timeslot in a time division multiplexing manner according to the at least one protocol layer of the first protocol stack and the second protocol stack, and sending the first signal to the receive end by using the first uplink carrier; and/or
the receiving, by using a first downlink carrier, a third signal sent by the receive end, and parsing the third signal according to the at least one protocol layer of the first protocol stack and the second protocol stack comprises:
receiving, by using the first downlink carrier in at least one timeslot in a time division multiplexing manner, the third signal sent by the receive end, and parsing the third signal according to the at least one protocol layer of the first protocol stack and the second protocol stack.

10. The method according to claim 9, wherein the method further comprises:
sending a seventh message, wherein the seventh message carries information that indicates receive/transmit transition time before and/or after the at least one timeslot.

11. The method according to claim 9 or 10, wherein the method further comprises:
sending an eighth message, wherein the eighth message carries information indicating that a subframe corresponding to the first uplink carrier in the at least one timeslot is a first dedicated subframe; and/or
sending a ninth message, wherein the ninth message carries information indicating that a subframe corresponding to the first downlink carrier in the at least one timeslot is a second dedicated subframe.

12. The method according to claim 1, wherein the generating a first signal according to at least one protocol layer of a first protocol stack and a second protocol stack, and sending the first signal to a receive end by using a first uplink carrier comprises:
generating the first signal according to the at least one protocol layer of the first protocol stack and at least one second protocol stack, and sending the first signal to the receive end by using the first uplink carrier, wherein one second protocol stack corresponds to one first signal, and corresponds to at least one receive end; and/or
the receiving, by using a first downlink carrier, a third signal sent by the receive end, and parsing the third signal according to the at least one protocol layer of the first protocol stack and the second protocol stack comprises:
receiving, by using the first downlink carrier, the third signal sent by the receive end, and parsing the third signal according to the at least one protocol layer of the first protocol stack and at least one second protocol stack, wherein one second protocol stack corresponds to one third signal, and corresponds to at least one receive end.

13. The method according to claim 1, wherein in addition to the generating a first signal according to at least one protocol layer of a first protocol stack and a second protocol stack, and sending the first signal to a receive end by using a first uplink carrier, the method further comprises:
generating a fifth signal according to the first protocol stack, and sending the fifth signal to the receive end by using the first downlink carrier; and/or
in addition to the receiving, by using a first downlink carrier, a third signal sent by the receive end, and parsing the third signal according to the at least one protocol layer of the first protocol stack and the second protocol stack, the method further comprises:
receiving, by using the first uplink carrier, a sixth signal sent by the receive end, and parsing the sixth signal according to the first protocol stack.

14. The method according to claim 1 or 13, wherein the second protocol stack and the first protocol stack are set together for a first access network entity; or
the first protocol stack is set for a first access network entity, and the second protocol stack is set for a second access network entity connected to the first access network entity.

15. The method according to any one of claims 1 to 14, that the second protocol stack is connected to the at least one protocol layer of the first protocol stack comprises:
the second protocol stack being connected to the at least one protocol layer of the first protocol stack by using an adaptation layer, wherein the adaptation layer is used to perform conversion processing for a signal between the at least one protocol layer of the first protocol stack and the second protocol stack.

16. The method according to any one of claims of 1 to 15, wherein the first protocol stack comprises a base station protocol stack, and the at least one protocol layer of the first protocol stack at least comprises a Packet Data Convergence Protocol PDCP layer of the base station protocol stack; and/or
the second protocol stack at least comprises a physical layer of a device-to-device protocol stack.

17. A signal transmission method, wherein the method comprises:
receiving, by using a first uplink carrier, a first signal sent by an access node, and parsing the first signal according to at least one protocol layer of a fourth protocol stack and a third protocol stack; and/or
generating a third signal according to the at least one protocol layer of the fourth protocol stack and the third protocol stack, and sending the third signal to the access node by using a first downlink carrier; wherein
the fourth protocol stack is used to implement communication between a base station and a user equipment on a user equipment side, the third protocol stack is used to implement communication between devices, and the third protocol stack is connected to the at least one protocol layer of the fourth protocol stack.

18. The method according to claim 17, wherein before the receiving, by using a first uplink carrier, a first signal sent by an access node, and parsing the first signal according to at least one protocol layer of a fourth protocol stack and a third protocol stack, the method further comprises:
sending a first message to the access node, wherein the first message carries information that requests access node to send a signal by using the first uplink carrier; and/or
before the generating a third signal according to the at least one protocol layer of the fourth protocol stack and the third protocol stack, and sending the third signal to the access node by using a first downlink carrier, the method further comprises:
sending a second message to the access node, wherein the second message carries information that requests access node to receive a signal by using the first downlink carrier.

19. The method according to claim 17, wherein the method further comprises:
if a third message sent by the access node is received, wherein the third message carries information that instructs to receive a signal sent by the access node by using the first uplink carrier, determining to receive the signal sent by the access node by using the first uplink carrier; and/or
if a fourth message sent by the access node is received, wherein the fourth message carries information that instructs to send a signal to the access node by using the first downlink carrier, determining to send the signal to the access node by using the first downlink carrier.

20. The method according to claim 17, wherein the method further comprises:
receiving, by using a second downlink carrier, a second signal sent by the access node, and parsing the second signal according to the fourth protocol stack; and/or
generating a fourth signal according to the fourth protocol stack, and sending the fourth signal to the access node by using a second uplink carrier.

21. The method according to claim 20, wherein the method further comprises:
determining that the first signal and the second signal correspond to the same data; and/or
determining that the third signal and the fourth signal correspond to the same data.

22. The method according to claim 21, wherein the determining that the first signal and the second signal correspond to the same data comprises:
if a fifth message sent by the access node is received, wherein the fifth message carries information indicating that the first signal and the second signal correspond to the same data, determining that the first signal and the second signal correspond to the same data; and/or
the determining that the third signal and the fourth signal correspond to the same data comprises:
if a sixth message sent by the access node is received, wherein the sixth message carries information indicating that the third signal and the fourth signal correspond to the same data, determining that the third signal and the fourth signal correspond to the same data.

23. The method according to claim 17, wherein the receiving, by using a first uplink carrier, a first signal sent by an access node, and parsing the first signal according to at least one protocol layer of a fourth protocol stack and a third protocol stack comprises:
receiving, by using the first uplink carrier in at least one timeslot in a time division multiplexing manner, the first signal sent by the access node, and parsing the first signal according to the at least one protocol layer of the fourth protocol stack and the third protocol stack; and/or
the generating a third signal according to the at least one protocol layer of the fourth protocol stack and the third protocol stack, and sending the third signal to the access node by using a first downlink carrier comprises:
generating the third signal in at least one timeslot in a time division multiplexing manner according to the at least one protocol layer of the fourth protocol stack and the third protocol stack, and sending the third signal to the access node by using the first downlink carrier.

24. The method according to claim 23, wherein the method further comprises:
determining receive/transmit transition time before and/or after the at least one timeslot according to a seventh message that is sent by the access node and carries information that indicates the receive/transmit transition time before and/or after the at least one timeslot.

25. The method according to claim 23 or 24, wherein the method further comprises:
determining, according to an eighth message that is sent by the access node and carries information indicating that a subframe corresponding to the first uplink carrier in the at least one timeslot is a first dedicated subframe, that the access node does not receive a signal in the first timeslot by using the first uplink carrier; and/or
determining, according to a ninth message that is sent by the access node and carries information indicating that a subframe corresponding to the first downlink carrier in the at least one timeslot is a second dedicated subframe, that the access node does not send a signal in the first timeslot by using the first downlink carrier.

26. The method according to claim 17, wherein in addition to the receiving, by using a first uplink carrier, a first signal sent by an access node, and parsing the first signal according to at least one protocol layer of a fourth protocol stack and a third protocol stack, the method further comprises:
receiving, by using the first downlink carrier, a fifth signal sent by the access node, and parsing the fifth signal according to the fourth protocol stack; and/or
in addition to the generating a third signal according to the at least one protocol layer of the fourth protocol stack and the third protocol stack, and sending the third signal to the access node by using a first downlink carrier, the method further comprises:
generating a sixth signal according to the fourth protocol stack, and sending the sixth signal to the access node by using the first uplink carrier.

27. The method according to any one of claims 17 to 26, that the third protocol stack is connected to the at least one protocol layer of the fourth protocol stack comprises:
the third protocol stack being connected to the at least one protocol layer of the fourth protocol stack by using an adaptation layer, wherein the adaptation layer is used to perform conversion processing for a signal between the at least one protocol layer of the fourth protocol stack and the third protocol stack.

28. The method according to any one of claims of 17 to 27, wherein the fourth protocol stack comprises a user equipment side protocol stack, and the at least one protocol layer of the fourth protocol stack at least comprises a Packet Data Convergence Protocol PDCP layer of the user equipment side protocol stack; and/or
the third protocol stack at least comprises a physical layer of a device-to-device protocol stack.

29. A signal transmission apparatus, wherein the apparatus comprises:
a processor, configured to: according to at least one protocol layer of a first protocol stack for implementing communication between a base station and a user equipment on a base station side and a second protocol stack for implementing communication between devices, generate a first signal or parse a third signal received by a receiving unit;
a sending unit, configured to send, by using a first uplink carrier, the first signal generated by the processor to a receive end; and/or
a receiving unit, configured to receive, by using a first downlink carrier, the third signal sent by the receive end; wherein
the second protocol stack is connected to the at least one protocol layer of the first protocol stack.

30. The apparatus according to claim 29, wherein the processor is configured to:
if a ratio of load of the first downlink carrier to a capacity of the first downlink carrier exceeds a first threshold, or if load of the first uplink carrier is lower than a capacity of the first uplink carrier, or if a first message sent by the receive end is received,
wherein the first message carries information that requests to use the first uplink carrier to send a signal to the receive end, determine to send the signal to the receive end by using the first uplink carrier; and/or
configured to: if a ratio of load of the first uplink carrier to a capacity of the first uplink carrier exceeds a second threshold; or if load of the first downlink carrier is lower than a capacity of the first downlink carrier, or if a second message sent by the receive end is received, wherein the second message carries information that requests to use the first downlink carrier to receive a signal sent by the receive end, determine to receive, by using the first downlink carrier, the signal sent by the receive end.

31. The apparatus according to claim 29, wherein the sending unit is further configured to send a third message to the receive end, wherein the third message carries information that instructs the receive end to receive a signal by using the first uplink carrier; and/or
configured to send a fourth message to the receive end, wherein the fourth message carries information that instructs the receive end to send a signal by using the first downlink carrier.

32. The apparatus according to claim 29, wherein the sending unit is further configured to send the first signal to the receive end by using the first uplink carrier and using transmit power less than or equal to a third threshold.

33. The apparatus according to claim 32, wherein the third threshold comprises transmit power of the user equipment.

34. The apparatus according to claim 29, wherein the processor is further configured to: according to the first protocol stack, generate a second signal or parse a fourth signal received by the receiving unit;
the sending unit is further configured to send, by using a second downlink carrier, the second signal generated by the processor to the receive end; and/or
the receiving unit is further configured to receive, by using a second uplink carrier, the fourth signal sent by the receive end.

35. The apparatus according to claim 34, wherein the processor is further configure to determine that the first signal and the second signal correspond to the same data; and/or
configured to determine that the third signal and the fourth signal correspond to the same data.

36. The apparatus according to claim 35, wherein the sending unit is further configured to send a fifth message to the receive end, wherein the fifth message carries information indicating that the first signal and the second signal correspond to the same data; and/or
configured to send a sixth message to the receive end, wherein the sixth message carries information indicating that the third signal and the fourth signal correspond to the same data.

37. The apparatus according to claim 29, wherein the sending unit is further configured to send the first signal to the receive end by using the first uplink carrier in at least one timeslot in a time division multiplexing manner; and/or
the receiving unit is further configured to receive, by using the first downlink carrier in at least one timeslot in a time division multiplexing manner, the third signal sent by the receive end.

38. The apparatus according to claim 37, wherein the sending unit is further configured to send a seventh message, wherein the seventh message carries information that indicates receive/transmit transition time before and/or after the at least one timeslot.

39. The apparatus according to claim 37 or 38, wherein the sending unit is further configured to send an eighth message, wherein the eighth message carries information indicating that a subframe corresponding to the first uplink carrier in the at least one timeslot is a first dedicated subframe; and/or
configured to send a ninth message, wherein the ninth message carries information indicating that a subframe corresponding to the first downlink carrier in the at least one timeslot is a second dedicated subframe.

40. The apparatus according to claim 29, wherein the processor is further configured to: according to the at least one protocol layer of the first protocol stack and at least one second protocol stack, generate the first signal or parse the third signal received by the receiving unit;
the sending unit is configured to send, by using the first uplink carrier, the first signal generated by the processor to the receive end, wherein one second protocol stack corresponds to one first signal, and corresponds to at least one receive end; and/or
the receiving unit is configured to receive, by using the first downlink carrier, the third signal sent by the receive end, wherein one second protocol stack corresponds to one third signal, and corresponds to at least one receive end.

41. The apparatus according to claim 29, wherein the processor is further configured to: according to the first protocol stack, generate a fifth signal or parse a sixth signal received by the receiving unit;
the sending unit is further configured to send, by using the first downlink carrier, the fifth signal to the receive end; and/or
the receiving unit is further configured to receive, by using the first uplink carrier, the sixth signal sent by the receive end.

42. The apparatus according to claim 29 or 41, wherein the second protocol stack and the first protocol stack are set together for a first access network entity; or
the first protocol stack is set for a first access network entity, and the second protocol stack is set for a second access network entity connected to the first access network entity.

43. The apparatus according to any one of claims 29 to 42, wherein the second protocol stack is connected to the at least one protocol layer of the first protocol stack by using an adaptation layer, wherein the adaptation layer is used to perform conversion processing for a signal between the at least one protocol layer of the first protocol stack and the second protocol stack.

44. The apparatus according to any one of claims 29 to 43, wherein the first protocol stack comprises a base station protocol stack, and the at least one protocol layer of the first protocol stack at least comprises a Packet Data Convergence Protocol PDCP layer of the base station protocol stack; and/or
the second protocol stack at least comprises a physical layer of a device-to-device protocol stack.

45. A signal transmission apparatus, wherein the apparatus comprises:
a processor, configured to: according to at least one protocol layer of a fourth protocol stack for implementing communication between a base station and a user equipment on a user equipment side and a third protocol stack for implementing communication between devices, parse a first signal received by a receiving unit or generate a second signal;
a receiving unit, configured to receive, by using a first uplink carrier, the first signal sent by an access node; and
a sending unit, configured to send, by using a first downlink carrier, the second signal generated by the processor to the access node; wherein
the third protocol stack is connected to the at least one protocol layer of the fourth protocol stack.

46. The apparatus according to claim 45, wherein the sending unit is further configured to send a first message to the access node, wherein the first message carries information that requests access node to send a signal by using the first uplink carrier; and/or
configured to send a second message to the access node, wherein the second message carries information that requests access node to receive a signal by using the first downlink carrier.

47. The apparatus according to claim 45, wherein the processor is further configured to: if a third message sent by the access node is received, wherein the third message carries information that instructs to receive a signal sent by the access node by using the first uplink carrier, determine to receive the signal sent by the access node by using the first uplink carrier; and/or
configured to: if a fourth message sent by the access node is received, wherein the fourth message carries information that instructs to send a signal to the access node by using the first downlink carrier, determine to send the signal to the access node by using the first downlink carrier.

48. The apparatus according to claim 45, wherein the processor is further configured to: according to the fourth protocol stack, parse the second signal received by the receiving unit or generate a fourth signal;
the receiving unit is further configured to receive, by using a second downlink carrier, the second signal sent by the access node; and/or
the sending unit is further configured to send, by using a second uplink carrier, the fourth signal generated by the processor to the access node.

49. The apparatus according to claim 48, wherein the processor is further configure to determine that the first signal and the second signal correspond to the same data; and/or
configured to determine that the third signal and the fourth signal correspond to the same data.

50. The apparatus according to claim 49, wherein the processor is further configured to: if a fifth message sent by the access node is received, wherein the fifth message carries information indicating that the first signal and the second signal correspond to the same data, determine that the first signal and the second signal correspond to the same data; and/or
configured to: if a sixth message sent by the access node is received, wherein the sixth message carries information indicating that the third signal and the fourth signal correspond to the same data, determine that the third signal and the fourth signal correspond to the same data.

51. The apparatus according to claim 45, wherein the receiving unit is further configured to receive, by using the first uplink carrier in at least one timeslot in a time division multiplexing manner, the first signal sent by the access node; and/or
the sending unit is further configured to send the third signal to the access node by using the first downlink carrier in at least one timeslot in a time division multiplexing manner.

52. The apparatus according to claim 52, wherein the processor is further configured to determine receive/transmit transition time before and/or after the at least one timeslot according to a seventh message that is sent by the access node and carries information that indicates the receive/transmit transition time before and/or after the at least one timeslot.

53. The apparatus according to claim 51 or 52, wherein the processor is further configured to determine, according to an eighth message that is sent by the access node and carries information indicating that a subframe corresponding to the first uplink carrier in the at least one timeslot is a first dedicated subframe, that the access node does not receive a signal in the first timeslot by using the first uplink carrier; and/or
configured to determine, according to a ninth message that is sent by the access node and carries information indicating that a subframe corresponding to the first downlink carrier in the at least one timeslot is a second dedicated subframe, that the access node does not send a signal in the first timeslot by using the first downlink carrier.

54. The apparatus according to claim 53, wherein the processor is further configured to: according to the fourth protocol stack, parse a fifth signal received by the receiving unit or generate a sixth signal;
the receiving unit is further configured to receive, by using the first downlink carrier, the fifth signal sent by the access node; and/or
the sending unit is further configured to send, by using the first uplink carrier, the sixth signal to the receive end.

55. The apparatus according to any one of claims 45 to 54, wherein the third protocol stack is connected to the at least one protocol layer of the fourth protocol stack by using an adaptation layer, wherein the adaptation layer is used to perform conversion processing for a signal between the at least one protocol layer of the fourth protocol stack and the third protocol stack.

56. The apparatus according to any one of claims 45 to 55, wherein the fourth protocol stack comprises a user equipment side protocol stack, and the at least one protocol layer of the fourth protocol stack at least comprises a Packet Data Convergence Protocol PDCP layer of the user equipment side protocol stack; and/or
the third protocol stack at least comprises a physical layer of a device-to-device protocol stack.
